(19) **Europäisches Patentamt** / **European Patent Office** / **Office européen des brevets**

(11) **EP 4 668 613 A1**

(12) **EUROPEAN PATENT APPLICATION**
published in accordance with Art. 153(4) EPC

(43) Date of publication:
**24.12.2025 Bulletin 2025/52**

(21) Application number: **23922001.5**

(22) Date of filing: **17.02.2023**

(51) International Patent Classification (IPC):
**H04B 7/155** (2006.01)

(52) Cooperative Patent Classification (CPC):
**H04B 7/155**

(86) International application number:
**PCT/CN2023/076895**

(87) International publication number:
**WO 2024/168859 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **FUJITSU LIMITED**
**Kawasaki-shi, Kanagawa 211-8588 (JP)**

(72) Inventors:
• JIANG, Qinyan
  **Beijing 100022 (CN)**
• ZHANG, Lei
  **Beijing 100022 (CN)**

(74) Representative: **Haseltine Lake Kempner LLP
Cheapside House
138 Cheapside
London EC2V 6BJ (GB)**

(54) **INFORMATION SENDING METHOD, INFORMATION RECEIVING METHOD, REPEATER AND NETWORK DEVICE**

(57) Embodiments of this disclosure provide an information transmitting method, an information receiving method, a repeater and a network device. The information receiving method includes: receiving by a repeater first indication information for indicating an access link beam, the first indication information including an information field for indicating a beam on an access link and an information field for indicating a time resource; and performing forwarding by using a first backhaul link beam on a first time resource, and/or performing forwarding by using a second backhaul link beam on a second time resource, and/or performing forwarding by using a third backhaul link beam on a third time resource, and/or not performing forwarding on a fourth time resource, by the repeater.

201

the repeater receives first indication information for indicating an access link beam, the first indication information including an information field for indicating a beam on an access link and an information field for indicating a time resource

202

the repeater performs forwarding by using a first backhaul link beam on a first time resource, and/or performing forwarding by using a second backhaul link beam on a second time resource, and/or performing forwarding by using a third backhaul link beam on a third time resource, and/or not performing forwarding on a fourth time resource

**Fig. 2**

## Description

Technical Field

This disclosure relates to the field of communication technologies.

Background

Compared with legacy 3G (third generation mobile communication technology) and 4G (fourth generation mobile communication technology) systems, a 5G (fifth generation mobile communication technology) system is able to provide larger bandwidths and higher data rates, and is able to support more types of terminals and vertical services.

For this reason, 5G systems are also deployed at new spectra in addition to legacy telecommunications spectra, and frequencies of the spectra are obviously higher than those of legacy telecommunications spectra used in 3G and 4G systems. For example, a 5G system may be deployed in a millimeter waveband (such as 28 GHz, 38GHz, 60 GHz, and higher wavebands).

According to the principle of propagation of wireless signals, the higher a carrier frequency, the more severe a fading experienced by signals during transmission. Therefore, in actual deployment, a 5G system needs a cell coverage enhancement method more than 3G and 4G systems need, especially a 5G system deployed in a millimeter waveband. Hence, how to better enhance cell coverage of a 5G system has become an urgent problem to be solved.

It should be noted that the above description of the background is merely provided for clear and complete explanation of this disclosure and for easy understanding by those skilled in the art. And it should not be understood that the above technical solution is known to those skilled in the art as it is described in the background of this disclosure.

Summary

In order to better solve the coverage problem of cellular mobile communication systems in practical deployment, use of a radio frequency (RF) relay/repeater to amplify and forward signals between a terminal equipment (UE) and a network device is commonly used means of deployment. RF repeaters are widely used in actual deployment of 3G and 4G systems. Generally speaking, an RF repeater is a device that amplifies and forwards signals between devices in the RF domain. That is, an RF repeater is a non-regenerative relay node, which only directly amplifies and forwards all received signals.

It was found by the inventors that for a coverage problem encountered in deploying a 5G system, performing coverage enhancement by using a legacy RF repeater is one of feasible solutions. However, as a forwarding behavior of a legacy RF repeater is not controlled by a network, on the one hand, an effect of amplifying and forwarding a target signal by the repeater may possibly be not ideal, and on the other hand, it may pose significant interference to other devices in the network, and increase noise and interference levels of the system, thereby reducing network throughput. Specifically, taking an antenna direction as an example, compared to 2G, 3G and 4G systems, a 5G system adopts the more advanced and complex MIMO (multiple-input multiple-output) technology. In the 5G system, especially for higher carrier frequencies, directional antennas have become basic components of a network device and a terminal equipment. Transmitting and receiving signals based on a beamforming technology is a fundamental signal transmission mode in the 5G system. (Analog) beam directions and widths, etc., of the network device and terminal equipment may dynamically change (i.e. beam switching) due to such factors as changes of positions. However, antennas of a legacy RF repeater may not be dynamically adjusted with respect to directions and have relatively wide beams, and beam directions and beam widths of transmitting and receiving antennas of the RF repeater are unable to flexibly match positions of the network device and terminal equipment and dynamic changes of the beam directions and widths of the transmitting and receiving antennas. If such an RF repeater is configured in the 5G system, on the one hand, its performance/effect of amplifying/enhancing target signals is/are not significant due to that the beam directions and beam widths of its transmitting and receiving antennas do not match the beam directions and beam widths of the network device and terminal equipment, and on the other hand, it may also cause significant interference to other devices (e.g. a network device or a terminal equipment) within a larger range due to use of wider transmitting beams, and increase noise and interference levels of the entire system, thereby reducing network throughput.

A network controlled repeater (NCR) scheme is proposed in 3GPP Rel-18 to enhance NR coverage, so as to forward signals between a network device and a terminal equipment. NCR may directly communicate with the network device via control links to assist in forwarding operations of the NCR.

It was found by the inventors that how a repeater indicates/determines a backhaul link beam has become an urgent problem to be solved.

In order to solve at least one of the above problems or other similar problems, embodiments of this disclosure provide an information transmitting method, an information receiving method, a repeater and a network device.

According to one aspect of the embodiments of this disclosure, there is provided a network device, including:

a transmitting unit configured to transmit first indication information and/or second indication information and/or third indication information and/or fourth indication information to a repeater, wherein,
the first indication information is used to indicate an access link beam,
the second indication information is used to indicate a backhaul link beam,
the third indication information is used to indicate a control link beam,
and the fourth indication information is used to configure a first TCI state set or a second TCI state set or a first SRI set.

According to another aspect of the embodiments of this disclosure, there is provided a repeater, including:

a mobile termination configured to receive first indication information for indicating an access link beam, the first indication information comprising an information field for indicating a beam on an access link and an information field for indicating a time resource; and
a forwarding unit configured to perform forwarding by using a first backhaul link beam on a first time resource, and/or perform forwarding by using a second backhaul link beam on a second time resource, and/or perform forwarding by using a third backhaul link beam on a third time resource, and/or not to perform forwarding on a fourth time resource.

According to a further aspect of the embodiments of this disclosure, there is provided a further aspect of the embodiments of this disclosure, there is provided a communication system, including the repeater as described in the other aspect and/or the network device as described in the one aspect.

An advantage of the embodiments of this disclosure exists in that by transmitting the indication information by the network device to the repeater, the beams when the NCR performs forwarding may be enabled to match with the beams of the terminal equipment for receiving forwarded signals, thereby improving the effect of amplifying/enhancing signals, reducing interference to other devices in the network, and improving throughput of the network.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/include/including" when used in this specification is taken to specify the presence of stated features, integers, steps or components but does not preclude the presence or addition of one or more other features, integers, steps, components or groups thereof.

Brief Description of the Drawings

Elements and features depicted in one drawing or embodiments of the disclosure may be combined with elements and features depicted in one or more additional drawings or embodiments. Moreover, in the drawings, like reference numerals designate corresponding parts throughout the several views and may be used to designate like or similar parts in more than one embodiment.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:

FIG. 1 is schematic diagram of a communication system of embodiments of this disclosure;
FIG. 2 is a schematic diagram of an information receiving method of embodiments of this disclosure;
FIGs. 3A-3F are schematic diagrams of a first MAC CE of the embodiments of this disclosure;
FIGs. 4A-4D are schematic diagrams of the first MAC CE of the embodiments of this disclosure;
FIG. 5A is a schematic diagram of a fourth MAC CE of the embodiments of this disclosure;
FIG. 5B is a schematic diagram of a fifth MAC CE of the embodiments of this disclosure;
FIG. 6 is a schematic diagram of DL BWPs of the embodiments of this disclosure;
FIG. 7 is a schematic diagram of UL BWPs of the embodiments of this disclosure;
FIG. 8A and FIG. 8B are schematic diagrams of time resources of the embodiments of this disclosure;
FIG. 9 is a schematic diagram of an information receiving method of embodiments of this disclosure;

FIG. 10 is a schematic diagram of an information receiving method of embodiments of this disclosure;

FIG. 11 is a schematic diagram of an information receiving method of embodiments of this disclosure;

FIG. 12 is a schematic diagram of an information transmitting method of embodiments of this disclosure;

FIG. 13 is a schematic diagram of a repeater of embodiments of this disclosure;

FIG. 14 is a schematic diagram of a network device of embodiments of this disclosure;

FIG. 15 is a schematic diagram of an electronic device of embodiments of this disclosure; and

FIG. 16 is a schematic diagram of forwarding signals by a network device and an NCR of embodiments of this disclosure.


Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "a terminal equipment (TE)". The terminal equipment may be fixed or mobile, and may also be referred to as a mobile station (MS), a terminal, a subscriber station (SS), an access terminal (AT), an IAB-MT, or a station, etc.

The terminal equipment may include but not limited to the following devices: a cellular phone, a personal digital assistant (PDA), a wireless modem, a wireless communication device, a hand-held device, an machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, existing traffics or traffics that may be implemented in the future may be performed between a network device and a terminal equipment. For example, such traffics may include but not limited to enhanced mobile broadband (eMBB), massive machine type communication (mMTC), ultra-reliable and low-latency communication (URLLC), and vehicle to everything (V2X) communication, etc.

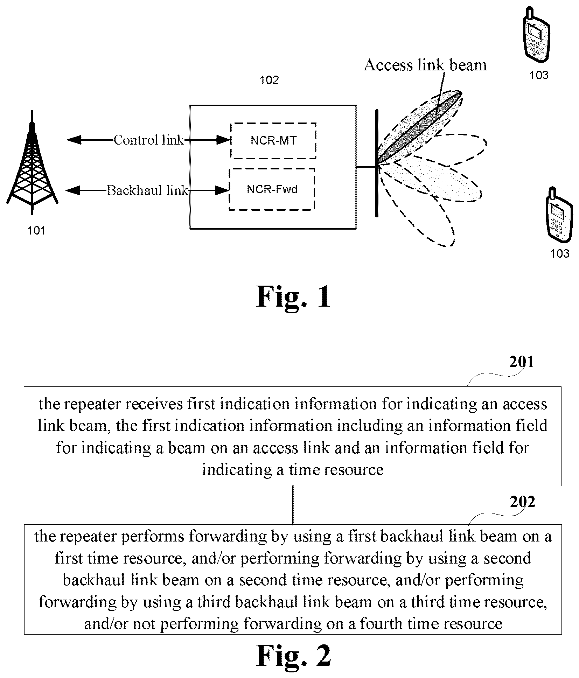

FIG. 1 is schematic diagram of an NCR of embodiments of this disclosure. As shown in FIG. 1, NCR 102 is configured between a network device 101 and a terminal equipment 103. NCR 102 may include the following two modules/components: a mobile termination of the repeater (NCR-MT) and a forwarding unit of the repeater (NCR-Fwd). The NCR-Fwd may also be referred to as a routing unit of the NCR (NCR-RU). The NCR-MT is used for communication with the network device (information exchange), the NCR-Fwd is used for forwarding signals between the network device and the terminal equipment, and the NCR-MT and NCR-Fwd are functional entities, with functions thereof being implemented by identical or different hardware modules.

As shown in FIG. 1, the NCR of the embodiments of this disclosure may have three links: a control link (C-link), a backhaul link (BH-link) for forwarding, and an access link (AC-link, also referred to as an NCR-UE link), wherein the C-link is used for communication between the NCR and the network device, the BH-link is used by the repeater to receive signals to be forwarded from the network device, or forward signals from the terminal equipment to the network device, and the AC-link is used by the repeater to forward signals from the network device to the terminal equipment, or receive signals to be forwarded from the terminal equipment. Specifically, the NCR-MT communicates with the network device via the C-link, and the NCR-Fwd forwards signals via the BH-link and the AC-link.

In the embodiments of this disclosure, the repeater may communicate with the network device, receive communication channels/signals transmitted by the network device, and demodulate/decode the channels/signals to obtain information transmitted by the network device to the repeater. A signal processing process is hereinafter referred to as "communication". The repeater may also forward channels/signals transmitted between the network device and the terminal equipment, does not demodulate/decode the channels/signals, and may perform amplification, etc. A signal processing process is hereinafter referred to as "forwarding", and "communication" and "forwarding" are collectively referred to as "transfer". In addition, 'performing transmission or reception on the AC-link (or the BH-link)' may be equivalent to 'performing forwarding on the AC-link (or the BH-link)', and 'performing transmission or reception on the control link' may be equivalent to 'performing communication on the control link'. The above terms are for convenience of explanation only, and are not intended to limit this disclosure. In some cases, "a forwarding unit" and "a forwarding behavior" are interchangeable.

In the embodiments of this disclosure, the repeater may also be expressed as a network-controlled repeater (NCR), a radio frequency repeater, a relay, a radio frequency relay; or, it may also be expressed as a repeater node, or a relay node; or, it may also be expressed as an intelligent repeater, an intelligent relay, an intelligent repeater node, an intelligent relay node, etc.; however, this disclosure is not limited thereto.

In the embodiments of this disclosure, the network device may be a device of a serving cell of the terminal equipment, or a device in a cell where the repeater is located, or a device of a serving cell of the repeater, or a parent node of the repeater. Names of the repeater are not limited in this disclosure, and any device able to achieve the above functions is included in the scope of the repeater of this disclosure.

In the embodiments of this disclosure, high-layer signaling may be, for example, radio resource control (RRC) signaling; for example, it includes an RRC message, which includes a master information block (MIB), system information, and a dedicated RRC message; or, it is an RRC information element (RRC IE); or an information field (or an information field included in an information field) included in an RRC message or an RRC information element. High-layer signaling may also be, for example, medium access control (MAC) signaling, or referred to as an MAC control element (MAC CE); however, this disclosure is not limited thereto.

In the embodiments of this disclosure, multiple means at least two, or two or more than two.

In the embodiments of this disclosure, "predefined" means defined in a protocol or determined according to a rule defined in a protocol, without needing additional configuration. Configuration/indication refer(s) to configuring/indicating directly or indirectly by a network device via high-layer signaling and/or physical layer signaling. The physical layer signaling refers to, for example, control information (DCI) carried by a physical control channel or control information carried by a sequence. However, it is not limited thereto, and configuration/indication may be performed by introducing a high-layer parameter into the high-layer signaling, the high-layer parameter referring to an information field and/or an information element (IE) in the high-layer signaling.

Rel-15/16 beam indication framework

For a serving cell, a UE may be configured with at most M TCI-State configurations in PDSCH-Config, so as to decode a PDSCH according to a detected PDCCH with DCI for the UE, wherein M is dependent on a UE capability maxNumberConfiguredTCIstatesPerCC. Each TCI-State includes a parameter for configuring a quasi-co-location relationship between downlink reference signals and a DMRS port of a PDSCH, a DMRS port of a PDCCH, or a CSI-RS port of a CSI-RS resource.

The UE receives an activation command (TCI States Activation/Deactivation for UE-specific PDSCH MAC CE, a fourth MAC CE described later), the activation command being used to, for a CC/BWP or a set of CCs/BWPs, map at most 8 TCI states to the codepoints of the DCI field 'Transmission Configuration Indication'. When only one TCI state is activated (that is, the activation command maps the TCI state to only one TCI codepoint), the UE shall apply the indicated TCI state to a CC/BWP or to a set of CCs/BWPs.

If RRC signaling configures only one TCI state, the UE may directly use the TCI state to receive a PDSCH, etc., without needing to be activated by the above fourth MAC CE. If the above fourth MAC CE activates only one TCI state, the UE may directly use the TCI state to receive a PDSCH, etc., without the need to further indicate a TCI state for a scheduled PDSCH, etc. by the DCI.

Rel-17 beam indication framework

The UE may be configured by a higher-layer parameter dl-OrJoint-TCIStateList in PDSCH-Config with at most 128 TCI-State configurations, which are used for providing QCL for a DMRS of a PDSCH and a DMRS of a PDCCH in a BWP/CC, and a reference signal for a CSI-RS, and for providing reference for determining PUSCH and PUCCH resources based on dynamic grant and configured grant in a BWP/CC and a UL TX spatial filter of an SRS.

If no TCI state or UL-TCI-State configurations exists in a BWP of a CC, the UE applies a TCI state or UL-TCI-State configurations of a reference BWP of a reference CC.

The UE receives an activation command (Unified TCI States Activation/Deactivation MAC CE, a sixth MAC CE), the activation command being used to, for a CC/BWP or a set of CCs/BWPs, map at most 8 TCI states and/or TCI states to the codepoints of the DCI field 'Transmission Configuration Indication'. When only one TCI state and/or UL-TCI-State is/are activated (that is, the activation command maps the TCI state and/or UL-TCI-State to only one TCI codepoint), the UE shall apply the indicated TCI state to a CC/BWP or to a set of CCs/BWPs, and to a CC/UL BWP or a set of CCs/UL BWPs, if possible.

If the RRC signaling configures only one TCI state, the UE directly uses the TCI state to receive PDSCHs, etc., without the need to be activated by the sixth MAC CE. If the sixth MAC CE activates only one TCI state, the UE directly uses the TCI state to receive PDSCHs, etc., without the need to further indicate a TCI state for a scheduled PDSCH, etc. by the DCI.

At present, it has been agreed in the standards that the "ON" state of the NCR-Fwd is indicated (implicitly) by an access link beam indication. That is, on a time resource (time period) indicating access link beams, the NCR-Fwd is in the ON state and may forward signals. However, as the prerequisite for the NCR-Fwd to be able to forward signals in a time period includes that for the time period, the NCR has not only the indicated/determined access link beam, but also the indicated/determined backhaul link beam and the indicated/determined forwarding direction, if the NCR-Fwd does not have an indicated/determined backhaul link beam and/or forwarding direction for the time resources (implicitly) indicated by the access link beam indication, the NCR-Fwd will essentially be unable to perform forwarding. However, how to determine and/or indicate a backhaul link beam still needs to be solved.

Especially, in determining a backhaul link beam, there is currently no solution to determine a CORESET with a minimum ID and a PUCCH with a minimum (PUCCH resource) ID;

no solution for how/whether to determine a default beam in the Rel-17 beam indication framework if no backhaul link beam is indicated; and
no solution for how to use an MAC CE to indicate a backhaul link beam.

Addressed to at least one of the above problems, implementations of the embodiments of this disclosure shall be described below with reference to the accompanying drawings. These implementations are illustrative only, and are not intended to limit this disclosure.

Embodiments of a first aspect

The embodiments of this disclosure provide an information receiving method, which shall be described from a repeater side.

FIG. 2 is a schematic diagram of the information receiving method of the embodiments of this disclosure. As shown in FIG. 2, the method includes:

201: the repeater receives first indication information for indicating an access link beam, the first indication information including an information field for indicating a beam on an access link and an information field for indicating a time resource; and
202: the repeater performs forwarding by using a first backhaul link beam on a first time resource, and/or performs forwarding by using a second backhaul link beam on a second time resource, and/or performs forwarding by using a third backhaul link beam on a third time resource, and/or not performs forwarding on a fourth time resource.

It should be noted that FIG. 2 only schematically illustrates the embodiments of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 2.

In some embodiments, the first indication information includes first beam indication information and/or second beam indication information, the first beam indication information being periodic access link beam indication information and/or being carried by RRC signaling, and the second beam indication information being aperiodic access link beam indication information and/or being carried by DCI. In the following description, the second beam indication information and the DCI (carrying the second beam indication information) may be interchangeable.

(I) For the first beam indication information

In some embodiments, the first beam indication information may be a newly introduced information field (higher-layer parameter) in RRC signaling, the new information field including one or more periodic beam indications for an access link (first beam indications). Each first beam indication includes forwarding resource lists, each of which including a fourth information field indicating a beam on an access link and a fifth information field indicating a time resource and the fifth information field includes duration information and/or offset information of a time resource in a period; furthermore, the first beam indication may include period information (for all time resources indicated by the first beam indication information) and/or priority information. In addition, the first beam indication information may include a sixth information field for indicating a first subcarrier spacing, the indicated first subcarrier spacing being for all time resources indicated by the first beam indication information. For example, all time resources indicated by the first beam indication information are related to the first subcarrier spacing, including that the duration information and/or offset information of each time resource is/are related to the first subcarrier spacing. Time units of the duration information and/or offset information may be milliseconds or slots or symbols, and duration(s) thereof is/are related to the first subcarrier spacing; however, the embodiments of this disclosure is not limited thereto.

In some embodiments, the network device may transmit one or more first beam indication information to the NCR, each first beam indication information including one or more of the above fourth information field, the fifth information field, the sixth information field, the period information and the priority information. For example, configuration is performed in a manner of ToAddModList or in other lists manners. Hence, one or more lists may be configured, wherein one list includes one of the above first beam indication information, thereby supporting one or more first beam indication information.

In some embodiments, the RRC signaling includes an RRC Reconfigure message, and/or an RRC Release message, and/or a first RRC message, the first RRC message being an NCR-specific RRC message.

In some embodiments, the first RRC message may include other information in addition to the first beam indication information, such as configuration information related to the second beam indication information, such as relevant configuration of the fourth information field and the fifth information field in the DCI (such as a time-domain resource list configuration described below, etc.) in (II); however, the embodiments of this disclosure are not limited thereto.

In some embodiments, after receiving the first beam indication information, the NCR needs to receive another indication before starting to perform forwarding by using a corresponding access link beam in the indicated time resource according to the first beam indication information, or, after receiving the first beam indication information, the NCR does not need to receive another indication before starting to perform forwarding by using a corresponding access link beam in the indicated time resource according to the first beam indication information.

In some embodiments, whether the NCR supports the first beam indication information is optional (may or may not support), or mandatory (support), or conditionally mandatory (e.g. support when a condition (e.g. operating frequency band FR2) is satisfied).

(II) For the second beam indication information

In some embodiments, the second beam indication information (DCI) may include one or more fourth information fields for indicating beams and one or more fifth information fields for indicating time resources. This DCI may be downlink control information having/using a first DCI format, which is used for access link beam indications. The downlink control information in the first DCI format is not used for scheduling PDSCHs or PUSCHs, or, the downlink control information in the first DCI format may also be used for scheduling PDSCHs or PUSCHs. The first DCI format may be a newly-introduced DCI format (e.g. DCI format 2_8, or 2_9, or 2_10, etc.), or may be an existing DCI format (e.g. 1_1, or 2_0, etc.) (the existing DCI format still supports functions in the embodiments of this disclosure); however, the embodiments of this disclosure are not limited thereto.

In some embodiments, "the downlink control information in the first DCI format" or "the downlink control information using the first DCI format" or "the DCI in the first DCI format" or "the second beam indication information" or "the DCI" may also be replaced with "the first DCI format".

In some embodiments, one fourth information field is used to indicate one beam index on an access link, or indicate at most one beam index on an access link, or indicate multiple beam indices on the access link(s). The beam index on an access link may include a beam index corresponding to an access link beam (or a (actual) physical beam) and/or a beam index not corresponding to a beam (or a (actual) physical beam).

In some embodiments, a beam index range is predefined and/or is configured/indicated by higher-layer signaling. For example, all beam indices within the beam index range are predefined or are configured/indicated by the higher-layer signaling, or some beam indices therein are predefined while others are configured/indicated by the higher-layer signaling. For the latter case, for example, beam indices corresponding beams are predefined, while beam indices not corresponding to beams are configured/indicated by the higher-layer signaling; however, it is not limited thereto.

In some embodiments, one fifth information field is used to indicate one time resource index, or indicate at most one time resource index, or indicate multiple time resource indices. The index may be replaced with a sequence number.

In some embodiments, the fifth information field corresponds to a time-domain resource table. The time-domain resource table is predefined and/or is configured by the above first RRC message or other RRC messages. The time-domain resource table includes one or more time resource configurations, and the time-domain resource (TDRA) table (or simply referred to as a TDRA table) includes at least one row (column). For ease of description, one row (column) is hereinafter referred to as one TDRA configuration, and one TDRA configuration includes one or more time resources or does not include a time resource. A time resource is continuous or discontinuous.

In some embodiments, a time resource is, for example, defined by one or more of the following parameters: a slot offset $K_3$, a symbol offset S, a duration L for determining a time resource, and a subcarrier spacing. These parameters are respectively predefined and/or are configured by higher-layer signaling. Wherein, slot offset $K_3$ refers to an offset between a starting slot of a time resource or a first slot corresponding to/overlapping with/associated with the starting slot of the time resource and a reference point. The reference point may be determined at least based on a slot or symbol where the DCI carrying the second beam indication information is located, or a slot or symbol where a PUCCH/PUSCH of HARQ feedback for the DCI or PDCCH carrying the second beam indication information is located. If a time resource configuration includes multiple time resources, reference points of slot offsets of different time resources are identical (for example, all of them are determined at least based on the slot or symbol where the DCI of the second beam indication information is located) or different (for example, for a first time resource, they are determined at least based on the slot or symbol where the DCI of the second beam indication information is located, and for subsequent time resources, they are determined at least based on a slot or symbol where a previous time resource is located). The symbol offset S refers to an offset between a first one of symbols of a time resource and a boundary/starting symbol/first one of symbols of the above starting slot or a starting symbol/first one of symbols of the DCI or PDCCH/PDCCH MO carrying the second beam indication information. The duration L of the time resource, for example, denotes the number of symbols contained in the time resource. The symbol offset S and/or the duration L of the time resource must ensure that the configured time resource is within the same slot, or that the configured time resource may be within the same slot or may be across slots. Numbers of time resources included in the configurations in the time-domain resource table are identical or different.

In some embodiments, time resources in a configuration may be defined in a form of a list or sequence. For example, an IE is introduced, which includes parameters of one time resource defined above. One configuration includes one list or sequence, the list or sequence including one or more fields corresponding to the above IE.

In some embodiments, the fifth information field may indicate one or more time resources or may not indicate a time resource by indicating the configurations in the time-domain resource table.

In some embodiments, the time resource index may include a time resource index corresponding to a time resource and/or a time resource index not corresponding to a time resource. For example, the time resource index is an index or sequence number configured by a column (row) in the time-domain resource table to which the fifth information field corresponds. If all configurations in the time-domain resource table include time resources, the time resource index includes only a time resource index corresponding to a time resource, and if there exist configurations that include time resources and configurations that do not include time resources in the time-domain resource table, the time resource index includes a time resource index corresponding to a time resource and a time resource index not corresponding to a time resource. For another example, all configurations in the time-domain resource table include time resources, if all values in the time resource index correspond to the configurations in the time-domain resource table, the time resource index includes only a time resource index corresponding to a time resource, and if a part of values in the time resource index correspond to the configurations in the time-domain resource table and another part of values do not correspond to any configuration in the time-domain resource table, the time resource index includes a time resource index corresponding to a time resource and a time resource index not corresponding to a time resource. Wherein, the time resource index not corresponding to a time resource, for example, is predefined and/or is configured by higher-layer signaling.

In some embodiments, the first time resource and/or the second time resource and/or the third time resource and/or the fourth time resource is/are a time resource(s) indicated by the first indication information, and forwarding by the repeater includes downlink forwarding and uplink forwarding. Wherein, performs downlink reception or uplink transmission in the first time resource on a control link, does not perform downlink reception and/or uplink transmission in the second time resource and/or the third time resource on a control link, and performs downlink reception or uplink transmission or does not perform downlink reception and/or uplink transmission in the fourth time resource.

In some embodiments, the first time resource and/or the second time resource and/or the third time resource and/or the fourth time resource do(es) not overlap or do(es) not completely overlap or partially overlap(s) with semi-statically configured flexible symbols.

In some embodiments, the first time resource and/or the second time resource and/or the third time resource and/or the fourth time resource overlap(s) or completely overlap(s) or partially overlap(s) with semi-statically configured downlink symbols, and the forwarding unit of the repeater performs downlink forwarding on all or a part of the time resources of the first time resource and/or the second time resource and/or the third time resource and/or the fourth time resource. Wherein, the downlink forwarding refers to receiving downlink signals (by the backhaul link) from the network (network device/gNB) and transmitting (by the access link) them to the UE after amplifying .

In some embodiments, the first time resource and/or the second time resource and/or the third time resource and/or the fourth time resource overlap(s) or completely overlap(s) or partially overlap(s) with the semi-statically configured uplink symbols, and the forwarding unit of the repeater performs uplink forwarding on all or a part of the time resources of the first time resource and/or the second time resource and/or the third time resource and/or the fourth time resource. Wherein, the uplink forwarding refers to: receiving uplink signals (by the access link) from UE and transmitting (by the backhaul link) them to the network (network device/gNB) after amplifying.

The above semi-static configuration includes a first TDD configuration (such as TDD-UL-DL-ConfigCommon) and/or a second TDD configuration (such as TDD-UL-DL-ConfigDedicated). For example, the first and/or second TDD configuration(s) may flexibly configure transmission direction types for time resources, where the transmission direction types include uplink, downlink, and flexible, and wherein the second TDD configuration is unable to rewrite downlink or uplink configured by the first TDD configuration. That is, if the first TDD configuration configures a slot or symbol as downlink (or uplink), the second TDD configuration is unable to reconfigure the slot or symbol as uplink or flexible (or downlink or flexible), even if it is configured as uplink or flexible (or downlink or flexible) in the second TDD configuration, the configuration in the first TDD configuration (still downlink (or uplink)) shall prevail. The second TDD configuration may rewrite the flexible configured by the first TDD configuration into downlink or uplink. That is, if the first TDD configuration configures a slot or symbol as flexible, or does not configure it as uplink or downlink, the second TDD configuration may configure it as downlink or uplink, and of course, it may also configure it as flexible.

In some embodiments, that the repeater performs forwarding on the first time resource and/or the second time resource and/or the third time resource and/or the fourth time resource includes performing forwarding on all or a part of the time resources of the first time resource and/or the second time resource and/or the third time resource and/or the fourth time resource.

The first backhaul link beam, the second backhaul link beam and the third backhaul link beam shall be respectively described below.

In some embodiments, the first backhaul link beam, the second backhaul link beam and the third backhaul link beam respectively include downlink beams and uplink beams. The downlink beam is used for downlink forwarding and receiving downlink signals (to be amplified) from the network (network device/gNB), and the uplink beam is used for uplink forwarding and transmitting (amplified) uplink signals to the network (network device/gNB).

In some embodiments, the first backhaul link beam is identical to the control link beam. For example, for time resources (first time resources) with simultaneous downlink reception or uplink transmission in both control and backhaul links, the backhaul link beam (first backhaul link beam) is identical to the control link beam (regardless of whether there is dedicated signaling indicating the backhaul link beam or whether the backhaul link beam is indicated and/or applied). The repeater performs downlink reception or uplink transmission by using the first backhaul link beam in the first time resource.

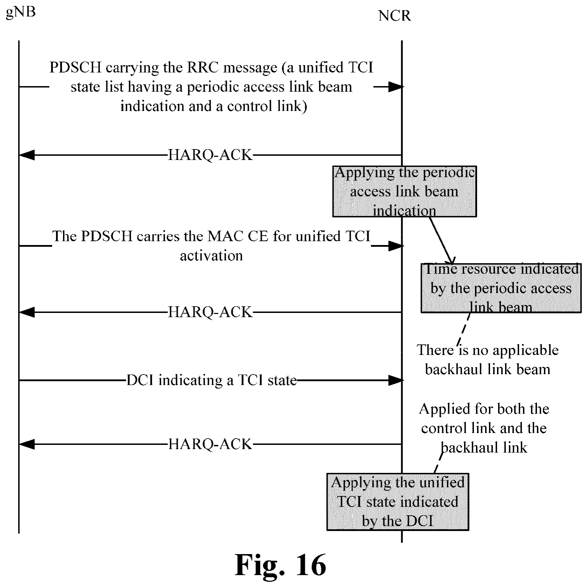

As described above, currently, it has agreed in the standards that the NCR-Fwd should be "ON" on the time resources indicated by the access link beam indication (the above first indication information), that is, the NCR shall perform forwarding on the time resource indicated by the access link beam indication. However, it was found by the inventors that according to an existing method for determining/indicating a backhaul link beam, when the Rel-17 beam indication framework is used for a control link, the backhaul link beam used for forwarding is indicated by the network device, or indicated by legacy signaling used to indicate unified TCI, or indicated by a new MAC CE dedicated to indicating a backhaul link beam. Thus, for the Rel-17 beam indication framework, the time resources indicated by the access link beam indication may possibly be located before the backhaul link beam indicated to the NCR (or before the NCR receives the legacy signaling used to indicate unified TCI and/or the new MAC CE dedicated to indicating a backhaul link beam) or before the NCR applies the indicated the unified TCI and/or backhaul link beam (or before the NCR applies the legacy signaling used to indicate unified TCI and/or the indication of the new MAC CE dedicated to indicating the backhaul link beam). If the time resource does not have simultaneous downlink reception or uplink transmission for both the control link and the backhaul link (or in other words, the time resource does not have downlink reception or uplink transmission for the control link), forwarding is unable to be performed on the time resource because the NCR does not have an applicable backhaul link beam, which conflicts with the agreement that the NCR shall be "ON" on the time resource indicated by the access link beam indication. That is, there is currently no method for an NCR to work or avoid such a situation. Problem 1, for example, as shown in FIG. 16, the network device first transmits an RRC message to the NCR, the RRC message including a configured unified TCI state list and the periodic access link beam indication. After a period of time, the NCR may apply the periodic access link beam indication (time resources and access link beams). According to provisions in a protocol, the NCR may perform forwarding on the time resources indicated by the access link beam indication (ON state), and then the network device transmits an MAC CE carrying an active unified TCI and DCI indicating a TCI state to the NCR, so that the NCR may determine the backhaul/control link beam according to the TCI state. After a period of time, the backhaul/control link beam may be applied, that is, the time resource indicated by the access link beam indication is located before the TCI state indicated to the NCR. If the NCR does not have an applicable backhaul link beam in the time resource, it is unable to perform forwarding on the time resource, which conflicts the agreement that the NCR shall be "ON" on the time resource indicated by the access link beam indication.

In order to solve problem 1, the embodiments of this disclosure propose a method for determining/indicating a backhaul link beam (second backhaul link beam) in this situation.

In some embodiments, that the second backhaul link beam is a predefined default beam includes:

a beam determined by a QCL assumption of a CORESET with a lowest ID; and/or,
a beam determined by a spatial relationship of a PUCCH with a lowest PUCCH resource ID; and/or,
a beam identical to a beam adopted by a control link in performing reception and/or transmission for a latest/last time; and/or,
a beam determined according to an SSB identified/selected in an initial access procedure; and/or,
a beam determined according to an SSB identified/selected in a random access procedure.

For example, for the beam determined by a QCL assumption of a CORESET with a lowest ID, the CORESET with a lowest ID is a CORESET with a lowest ID in a first DL BWP and/or a first time position. The CORESET may be CORESET #0, the first DL BWP is in a Pcell, and/or, the first DL BWP is an initial DL BWP or a default DL BWP or an active DL BWP, and the first time position includes: the NCR-MT monitors (such as within an active BWP of the serving cell (such as the PCell)/within the above first DL BWP) the latest/last slot in one or more CORESETs(the latest/last slot in which (one or more) CORESETs are monitored by the NCR-MT or the latest/last slot of one or more CORESETs are monitored by the NCR-MT ).

For example, for the beam determined by a spatial relationship of a PUCCH with a lowest PUCCH resource ID, the PUCCH with the lowest PUCCH resource ID is a PUCCH with a lowest PUCCH resource ID at the first UL BWP and/or the second time position, the first UL BWP is in the Pcell, and/or, the first UL BWP is an initial UL BWP or a default UL BWP or an active UL BWP, and the second time position includes: the latest/last slot in which a PUCCH is transmitted by the NCR-MT, or the latest/last slot in which a PUCCH is transmitted by the NCR-MT (such as within an active BWP of the serving cell).

For example, for the beam identical to a beam adopted by a control link in performing reception and/or transmission for a latest/last time, the control link in performing reception for a latest/last time includes: monitoring a PDCCH and/or receiving a PDSCH and/or a CSI-RS and/or an SSB for a latest/last time, and the control link in performing transmission for a latest/last time includes: transmitting a PUSCH and/or a PUCCH and/or an SRS for a latest/last time.

For example, for the beam determined according to an SSB identified/selected in an initial access procedure or the beam determined according to an SSB identified/selected in a random access procedure, for the downlink, determination according to an SSB identified/selected in an initial access procedure or a random access procedure by the NCR includes that: the QCL assumption is based on an SSB identified/selected in the initial access procedure, or, in other words, identical to beams for receiving an RAR, and/or for receiving a DCI/PDCCH used for scheduling a PUSCH (Msg.3), and/or for receiving a DCI/PDCCH used for scheduling a PDSCH (Msg.4), and/or for receiving Msg.4 in the initial access procedure (or, for the downlink, the above second backhaul link (uplink) beam is identical to a beam used for receiving an RAR, and/or for receiving a DCI/PDCCH for scheduling a PUSCH (Msg.3), and/or for receiving a DCI/PDCCH for scheduling a PDSCH (Msg.4), and/or for receiving Msg.4, in the initial access procedure). For the uplink, the UL TX spatial filter is identical to a PUSCH scheduled by an RAR, and/or a PUSCH (Msg.3) and/or a PUCCH scheduled by a DCI/PDCCH in the initial access procedure or random access procedure (or, for the uplink, the above second backhaul link (uplink) beam is identical to a beam used for receiving an RAR, and/or for receiving a DCI/PDCCH for scheduling a PUSCH (Msg.3), and/or for receiving a DCI/PDCCH4 for scheduling a PDSCH (Msg.4), and/or for receiving Msg.4 in the initial access procedure). wherein, the random access procedure is used for initial access or beam failure recovery or RRC connection reestablishment or RRC connection recovery.

In some embodiments, different from the second backhaul link beam defined by default, the third backhaul link beam is indicated by the second indication information used to indicate backhaul link beams or is determined according to the third indication information used to indicate control link beams (e.g. identical to the control link beams as indicated by the third indication information, and at this time, it may also be said that the third indication information is also used to indicate backhaul link beams).

For example, the second indication information is MAC signaling. Wherein, the second indication information indicates a TCI state used for the backhaul link from the first TCI state set, or indicates a TCI state used for the backhaul link from the second TCI state set, or indicates an SRI used for the backhaul link from a first SRI set. For example, when the control link applies the Rel-15/16 beam indication framework, for a downlink beam, the second indication information indicates a TCI state used for the backhaul link from the first TCI state set, and for an uplink beam, the second indication information indicates an SRI used for the backhaul link from the first SRI set, and when the control link applies the Rel-17 beam indication framework, the second indication information indicates a TCI state used for the backhaul link from the second TCI state set.

The second indication information shall be described below in detail.

In some embodiments, the second indication information includes one or more MAC CEs, such as a first MAC CE, a second MAC CE and a third MAC CE, the first MAC CE, the second MAC CE and the third MAC CE being different, or information fields or functions included in the first MAC CE, the second MAC CE and the third MAC CE being implemented by the same MAC CE, i.e. the first MAC CE, the second MAC CE and the third MAC CE are identical MAC CEs.

For the first MAC CE

In some embodiments, the first MAC CE is used to indicate downlink beams of the backhaul link. When the control link applies the Rel-15/16 beam indication framework, for a downlink beam, the second indication information indicates a TCI state used for the backhaul link from the first TCI state set. Wherein, the first TCI state set includes, for example, TCI states configured by all (configured) DL BWPs of a serving cell (such as the Pcell), i.e. a union of TCI states (TCI state lists) of all BWPs configured by, for example, tci-StatesToAddModList and tci-StatesToReleaseList (i.e. configured for PDSCHs) and/or configured by *tci-StatesPDCCH-ToAddList* and *tci-StatesPDCCH-ToReleaseList* (i.e. configured for PDCCHs) in PDSCH-Config. Or, the first TCI state set may include, for example, TCI states of one of the DL BWPs in a serving cell (such as the Pcell), i.e. TCI states (TCI state list) of the DL BWP configured by, for example, tci-States-ToAddModList and ttci-StatesToReleaseList (i.e. configured for PDSCHs) and/or *tci-StatesPDCCH-ToAddList* and *tci-StatesPDCCH-ToReleaseList* (i.e. configured for PDCCHs) in PDSCH-Config, that is, the TCI states are equal to the TCI states (TCI state list) of the DL BWP configured by ttci-StatesToAddModList and tci-StatesToReleaseList and/or configured by *tci-StatesPDCCH-ToAddList* and *tci-StatesPDCCH-ToReleaseList* in PDSCH-Config. Following description shall be given by taking the second case as an example.

In some embodiments, the first MAC CE at least includes a first information field for indicating a TCI state (e.g. a TCI state ID), and includes or does not include a second information field for indicating a serving cell (e.g. a serving cell ID) and/or a third information field for indicating a downlink BWP (e.g. a BWP ID).

For example, that the first MAC CE does not include a second information field used to indicate a serving cell means that a TCI state indicated by a predefined or indicated downlink BWP (and/or the first information field) belongs to a predefined/default serving cell. Or, the first MAC CE/first information field selects a TCI state or TCI state ID from a (configured) TCI state list of the predefined/default serving cell (that is, the first TCI state set belongs to a (configured) TCI state list (for) of the predefined/default serving cell). For example, the serving cell refers to a Pcell, by default.

For example, that the first MAC CE does not include a third information field used to indicate a downlink BWP means that an indicated (by the first information field) TCI state belongs to a predefined/default downlink BWP of a predefined or indicated (by the second information field) serving cell, or in other words, the first MAC CE/first information field selects a TCI state or a TCI state ID from a (configured) TCI state list (for) of the predefined/default downlink BWP (that is, the first TCI state set belongs to the (configured) TCI state list (for) of the predefined/default downlink BWP). For example, the downlink BWP is an initial downlink BWP, or a downlink BWP by default, or an active downlink BWP, or another specific DL BWP, by default.

For example, that the first MAC CE includes a second information field and a third information field means that the indicated (by the first information field) TCI state belongs to an indicated (by the third information field) DL BWP in an indicated (by the second information field) serving cell, or in other words, the first MAC CE/first information field selects a TCI state or a TCI state ID from a TCI state list (configured by) of the indicated (by the third information field) DL BWP in the indicated (by the second information field) serving cell (that is, the first TCI state set belongs to the TCI state list of the indicated (by the third information field) DL BWP in the indicated (by the second information field) serving cell.

In some embodiments, the first MAC CE has a variable or fixed bit size, wherein having a fixed bit size includes that information fields included in the first MAC CE and the number of bits included in each information field are fixed, and having a variable bit size includes that information fields included in the first MAC CE and/or the number of bits included in one or more of the information fields are variable. The first MAC CE includes or does not include reserved bits.

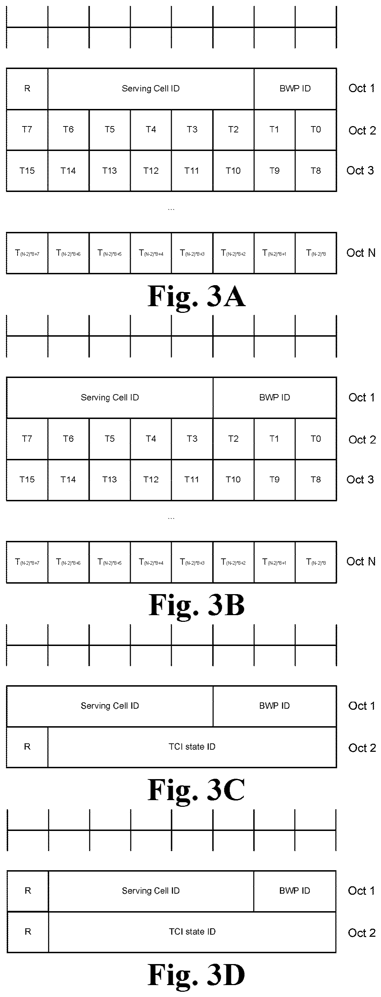

The first MAC CE shall be described below with reference to FIGs. 3A to 3F. In the following examples, it is assumed that the first MAC CE includes the first information field, the second information field and the third information field.

As shown in FIG. 3A, the second information field is 5 bits, the third information field is 2 bits, and the number of the first information fields is variable, such as being determined by the number of TCI states in the TCI state list (configured by) of the indicated (by the second information field) downlink BWP in the indicated (by the first information field) serving cell. Wherein, the second information field $T_i$ corresponds to a TCI state in the above TCI state list with a TCI StateId i. When $T_i$ is set to be 1, a corresponding TCI state is indicated, that is, the first MAC CE indicates that the backhaul link beam for the NCR is a beam to which the TCI state corresponds. When $T_i$ is set to be 0, a corresponding TCI state is not indicated. Or, when $T_i$ is set to be 0, a corresponding TCI state is indicated, and when $T_i$ is set to be 1, a corresponding TCI state is not indicated; however, the embodiments of this disclosure are not limited thereto. The first MAC CE may indicate only one TCI state. R is the reserved bit(s).

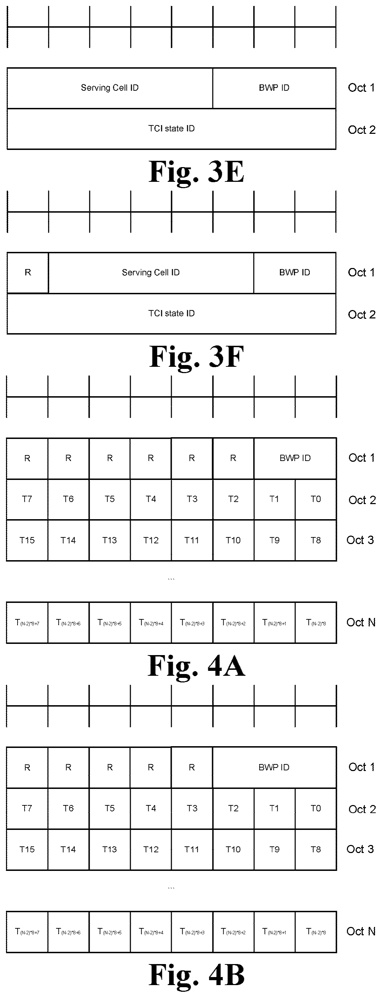

As shown in FIG. 3B, a difference from FIG. 3A exists in that the third information field is 3 bits, but does not include reserved bit(s). As shown in FIG. 3C, a difference from FIG. 3A exists in that the third information field is 3 bits and the first information field is 7 bits, which is used to indicate a TCI state identified by TCI StateId. As shown in FIG. 3D, a difference from FIG. 3C exists in that the third information field is 2 bits and the reserved bits are 2 bits. As shown in FIG. 3E, a difference from FIG. 3C exists in that the first information field is 8 bits and does not include a reserved bit. As shown in FIG. 3F, a difference from FIG. 3E exists in that the third information field is 2 bits and includes reserved bits.

In the above example, when the second information field includes 2 bits, it is used to indicate one of configured downlink BWPs when the initial downlink BWP is or is not the configured downlink BWP. Therefore, if the initial downlink BWP is not the configured downlink BWP, the second information field is unable to indicate the initial downlink BWP. When the second information field includes 3 bits, it is used to indicate the initial downlink BWP and/or the configured downlink BWP. Therefore, even if the initial downlink BWP is not the configured downlink BWP, the second information field may indicate the initial downlink BWP.

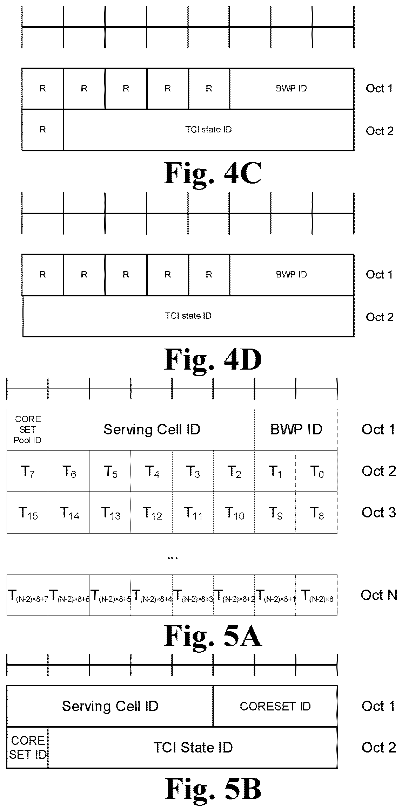

The first MAC CE shall be exemplified below with reference to FIGs. 4A-4D. In the following examples, it is assumed that the first MAC CE does not include the second information field, but includes the first information field and the third information field. As shown in FIGs. 4A -4D, a difference from FIGs. 3A- 3F is that the second information field is replaced with reserved bits, that is, at least 5 reserved bits are included.

In some embodiments, the NCR further receives (one or more) TCI states activation/deactivation UE-specific PDSCH MAC CEs (referred to as fourth MAC CEs). For the NCR, the MAC CE includes an information field (CORESET Pool ID) used to indicate a CORESET pool, but the NCR does not expect that any CORESET is configured with a CORESET pool index coresetPoolIndex and/or the NCR ignores the information field; or, for the NCR, the MAC CE does not include an information field (CORESET Pool ID) for indicating a CORESET pool (i.e. the NCR does not expect that the MAC CE includes an information field for indicating a CORESET pool).

In some embodiments, the NCR further receives (one or more) TCI states indication UE-specific PDCCH MAC CEs (referred to as fifth MAC CEs). FIGs. 5A and 5B are schematic diagrams of the fourth MAC CE and fifth MAC CE of the embodiments of this disclosure. As shown in FIGs. 5A and 5B, the fourth MAC CE and fifth MAC CE include information fields (CORESET Pool IDs) for indicating CORESET pools and information fields for activing TCI states and/or indicating TCI states. Optionally, they may further include information fields for indicating serving cells or information fields for indicating downlink BWP IDs.

In some embodiments, the TCI state indicated by the first MAC CE is or is not an activated (by a legacy MAC CE) TCI state and/or an indicated (by a legacy MAC CE) TCI state. For example, it is required in a protocol that the TCI state indicated by the first MAC CE must be an activated (by the fourth MAC CE, a TCI States activation/deactivation for UE-specific PDCCH MAC CE) TCI state, or the TCI state indicated by the first MAC CE must be the indicated (by the fifth MAC CE(TCI State Indication for UE-specific PDCCH MAC CE)) TCI state or the TCI state indicated by the first MAC CE must be the activated and the indicated (by the fourth and fifth MAC CEs) TCI state, or, it is not limited thereto, and the TCI state indicated by the first MAC CE may also be other TCI state(s) than an activated (by a second MAC CE described later) TCI state(s) and/or an indicated (by a third MAC CE described later) TCI state(s).

In some embodiments, the NCR (NCR-MT) does not expect to be configured with multiple serving cells, that is, the NCR is only configured with one serving cell, i.e. a Pcell. In this case, the first MAC CE includes or does not include the above second information field. If the first MAC CE includes an information field used to indicate a serving cell, it must indicate a Pcell, that is, a value of the information field must be equal to 0.

In some embodiments, the NCR (NCR-MT) may be configured with multiple downlink BWPs. Or, the NCR does not expect to be configured with multiple downlink BWPs, that is, the NCR is configured with only one downlink BWP, i.e. an initial downlink BWP. In this case, the first MAC CE includes or does not include the above third information field. If the first MAC CE includes an information field for indicating a downlink BWP, it must indicate an initial downlink BWP, that is, a value of the information field must be equal to 0.

In some embodiments, taking the case where the first MAC CE does not include the third information field into account, by default, the downlink BWP is, for example, an initial downlink BWP, or a default downlink BWP, or an activated downlink BWP. If it is an activated downlink BWP, taking possible occurrence of DL BWP switch into account, it is needed to further determine which downlink BWP is based; otherwise, the NCR may possibly not be able to correctly understand indication/configuration of the network device.

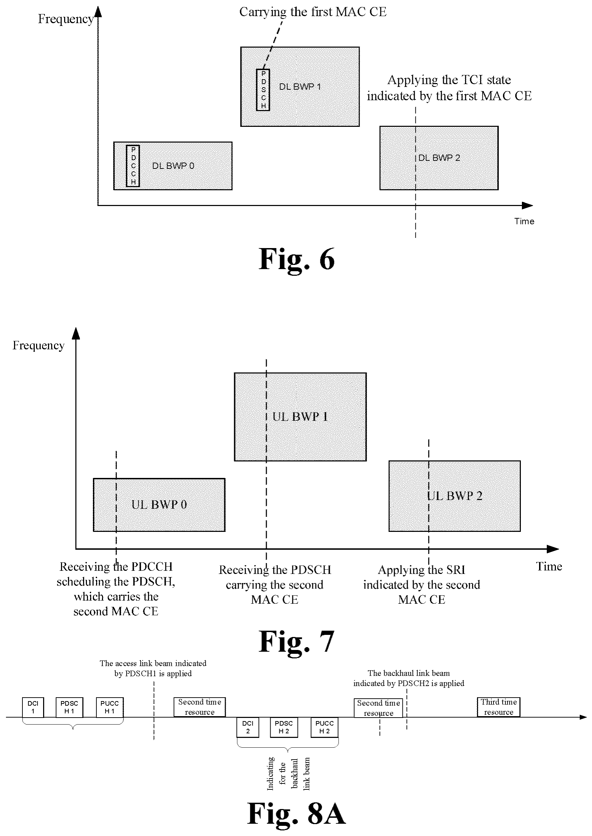

In some embodiments, the PDSCH used to carry the first MAC CE and the DCI/PDCCH scheduling the PDSCH are transmitted at identical or different downlink BWPs. That is, the activated downlink BWP in receiving the PDSCH is identical to or different from the activated downlink BWP in receiving the DCI/PDCCH scheduling the PDSCH. If they are different, BWP switch must have occurred in this period, and if they are identical, it cannot be ruled out that a BWP may have occurred in this period. As shown in FIG. 6, the above PDSCH and PDCCH are at different downlink BWPs, namely, DL BWP 0 and DL BWP 1, respectively.

In some embodiments, the DL BWP where the PDSCH carrying the first MAC CE is located (i.e. the activated DL BWP in receiving the first MAC CE) is identical to or different from the activated DL BWP in applying the TCI state indicated by the first MAC CE. If they are different, BWP switch must have occurred in this period, and if they are identical, it cannot be ruled out that DL BWP switch may have occurred in this period. As shown in FIG. 6, the BWP where the above PDSCH is located and the activated DL BWP in applying the TCI state indicated by the first MAC CE are different, namely, DL BWP 1 and DL BWP 2, respectively.

In addition, the inventors think that if TCI state lists configured for above different downlink BWP are different, according to the TCI state ID indicated by the first MAC CE and based on different downlink BWPs, TCI states determined by the NCR may be different (for example, reference signals included in the TCI states are different). That is, which TCI state is indicated by the network device is ambiguous, and the NCR is unable to uniquely determine which TCI state or reference signal is to be used. In order to solve this problem, the method may further include:

the NCR expects that TCI state lists configured for all DL BWPs (of the first serving cell) are identical, or
the NCR expects that no DL and/or UL BWP switch occurs between receiving the above PDSCH and DCI/PDCCH, and/or, expects that no DL and/or UL BWP switch occurs between receiving the above PDSCH and applying the indicated TCI state, and/or expects that no DL and/or UL BWP switch occurs between receiving the above DCI/PDCCH and applying the indicated TCI state, or
determines a TCI state based on the DL BWP where the PDSCH is located or based on the DL BWP where the DCI/PDCCH is located (in a case where the PDSCH and the DCI/PDCCH are at different DL BWPs and/or in a case where the BWP to which the PDSCH corresponds is different from the activated DL BWP in applying the TCI state indicated by the first MAC CE); or, in other words, the above activated DL BWP refers to the activated DL BWP in receiving the PDSCH, or the activated DL BWP in receiving the DCI/PDCCH, or,
determines a TCI state based on the DL BWP where the PDSCH is located or based on the activated DL BWP in applying the TCI state indicated by the first MAC CE (in a case where the BWP to which the PDSCH corresponds is different from the activated DL BWP in applying the TCI state indicated by the first MAC CE); or, in other words, the above activated DL BWP refers to the activated DL BWP in receiving the PDSCH, or the activated DL BWP in receiving the TCI state.

Specifically, (for the case where the first MAC CE includes or does not include the third information field) if DL BWP switch occurs after the indicated (by the first MAC CE) TCI state is applied, the NCR proceeds to perform forwarding by using the TCI state, or, the NCR performs forwarding after redetermining a TCI state according to the switched DL BWP. For example, before DL BWP switch, the NCR determines a TCI state according to DL BWP 0 (indicated by the third information field or determined in the above method (when the third information field is not included), and after DL BWP switch, redetermines a TCI state according to DL BWP 1 (activated DL BWP after switch) (assuming that the first information field in the first MAC CE indicates a corresponding TCI state ID (configured for) of DL BWP 1). Or, the NCR expects that the above situation (BWP switch occurs after the indicated TCI state is applied) will not occur, or, the NCR expects that BWP switch will not occur before a new first MAC CE (or a corresponding PDSCH) is received or the DCI/PDCCH used for scheduling the PDSCH is received.

For the second MAC CE

In some embodiments, the second MAC CE is used to indicate uplink beams of the backhaul link. When the control link applies the Rel-15/16 beam indication framework, for the uplink beams, the second indication information indicates an SRI used for the backhaul link from a first SRI set, wherein the first SRI set includes, for example, SRIs configured by all (configured) UL BWPs of a serving cell (such as a Pcell), i.e. a union of SRIs of all UL BWPs configured by, for example, spatialRelationInfoToAddModList and spatialRelationInfoToReleaseList (i.e. SRIs configured for PUCCHs). Or, the first SRI set includes, for example, configured SRIs of one of UL BWPs of a serving cell (e.g. a Pcell), that is, SRIs of a UL BWP configured by spatialRelationInfoToAddModList and spatialRelationInfoToReleaseLis (i.e. configured for PUCCHs). Following description shall be given by taking the second case as an example.

In some embodiments, the second MAC CE includes a first information field for indicating an SRI (e.g. an SRI ID), and includes or does not include a second information field for indicating a serving cell (e.g. a serving cell ID) and/or a third information field for indicating a UL BWP (e.g. a BWP ID). The second MAC CE is based on an SRI list indication configured for PUCCHs, for example, the first information field indicates an SRI for the backhaul link by indicating pucch-SpatialRelationInfoId.

For example, that the second MAC CE does not include the second information field used to indicate the serving cell means that a predefined or indicated UL BWP and/or an indicated (by the first information field) SRI belong(s) to a predefined/default serving cell. Or, in other words, the second MAC CE/first information field selects an SRI from the first SRI set (configured for) the predefined/default serving cell (i.e. the first SRI set belongs to (configured for) the predefined/default serving cell). For example, the serving cell refers to a Pcell, by default.

For example, that the second MAC CE does not include the third information field used to indicate a UL BWP means that the indicated (by the first information field) SRI is of a predefined/default UL BWP of a predefined or the indicated (by the second information field) serving cell. Or, in other words, the second MAC CE/first information field selects an SRI from the first SRI set (configured for) of the predefined/default uplink BWP (i.e. the first SRI set belongs to (configured for) the predefined/default uplink BWP). For example, the UL BWP is an initial UL BWP, or a default UL BWP, or an activated UL BWP, or another specific UL BWP, by default.

For example, that the second MAC CE includes a second information field and a third information field means that the indicated (by the first information field) SRI belongs to an indicated (by the third information field) UL BWP in an indicated (by the second information field) serving cell, or in other words, the second MAC CE/first information field selects an SRI from a first SRI set (configured by) of the indicated (by the third information field) uplink BWP in the indicated (by the second information field) serving cell (that is, the first SRI set belongs to the UL BWP of the indicated (by the third information field) UL BWP in the indicated (by the second information field) serving cell.

In some embodiments, the second MAC CE has a variable or fixed bit size, wherein having a fixed bit size includes that information fields included in the second MAC CE and the number of bits included in each information field are fixed, and having a variable bit size includes that information fields included in the second MAC CE and/or the number of bits included in one or more of the information fields are variable. The second MAC CE includes or does not include reserved bits.

In some embodiments, the NCR (NCR-MT) does not expect to be configured with multiple serving cells, that is, the NCR is only configured with one serving cell, i.e. a Pcell. In this case, the second MAC CE includes or does not include the above second information field. If the second MAC CE includes an information field used to indicate a serving cell, it must indicate a Pcell, that is, a value of the information field must be equal to 0.

In some embodiments, the NCR (NCR-MT) may be configured with multiple UL BWPs. Or, the NCR does not expect to be configured with multiple UL BWPs, that is, the NCR is configured with only one UL BWP, i.e. an initial UL BWP. In this case, the second MAC CE includes or does not include the above third information field. If the second MAC CE includes an information field for indicating a UL BWP, it must indicate an initial UL BWP, that is, a value of the information field must be equal to 0.

In some embodiments, taking the case where the second MAC CE does not include the third information field into account, by default, the UL BWP is, for example, an initial UL BWP, or a default UL BWP, or an activated UL BWP. If it is an activated UL BWP, taking possible occurrence of UL BWP switch into account, it is needed to further determine which UL BWP is based; otherwise, the NCR may possibly not be able to correctly understand indication/configuration of the network device.

In some embodiments, the PDSCH used to carry the second MAC CE and the DCI/PDCCH scheduling the PDSCH correspond identical or different UL BWPs. That is, the activated UL BWP in receiving the PDSCH is identical to or different from the activated UL BWP in receiving the DCI/PDCCH scheduling the PDSCH. If they are different, BWP switch must have occurred in this period, and if they are identical, it cannot be ruled out that a UL BWP may have occurred in this period. As shown in FIG. 7, the above PDSCH and PDCCH correspond to different UL BWPs, namely, UL BWP 0 and BWP 1, respectively.

In some embodiments, the UL BWP to which the PDSCH carrying the second MAC CE corresponds and the activated UL BWP in applying the TCI state indicated by the second MAC CE are identical or different. If they are different, UL BWP switch must have occurred in this period, and if they are identical, it cannot be ruled out that UL BWP may have occurred in this period. As shown in FIG. 7, a UL BWP to which the above PDSCH corresponds and the active UL BWP in applying the SRI indicated by the second MAC CE are different, namely, UL BWP 1 and UL BWP 2, respectively.

In addition, the inventors think that if first SRI sets configured for above different uplink BWPs are different, according to the SRI indicated by the second MAC CE and based on different uplink BWPs, SRIs determined by the NCR may be different. That is, which SRI is indicated by the network device is ambiguous, and the NCR is unable to uniquely determine which SRI is to be used. In order to solve this problem, the method may further include:

the NCR expects that first SRI sets configured for all UL BWPs (of the first serving cell) are identical, or

the NCR expects that no DL and/or UL BWP switch occurs between receiving the above PDSCH and DCI/PDCCH, and/or, expects that no DL and/or UL BWP switch occurs between receiving the above PDSCH and applying the indicated SRI, and/or expects that no DL and/or UL BWP switch occurs between receiving the above DCI/PDCCH and applying the indicated SRI, or

determines an SRI based on the UL BWP to which the PDSCH corresponds (i.e. the activated UL BWP in receiving the PDSCH) or based on the UL BWP to which the DCI/PDCCH corresponds (i.e. the activated UL BWP in receiving the DCI/PDCCH) (in a case where the PDSCH and the DCI/PDCCH correspond to different UL BWPs (i.e. the activated UL BWP in receiving the PDSCH and the activated UL BWP in receiving the DCI/PDCCH are different) and/or in a case where the UL BWP to which the PDSCH corresponds (i.e. the activated UL BWP in receiving the PDSCH) is different from the activated UL BWP in applying the SRI indicated by the second MAC CE); or, in other words, the above activated UL BWP refers to the activated UL BWP in receiving the PDSCH, or the activated UL BWP in receiving the DCI/PDCCH, or,

determines an SRI based on the UL BWP to which the PDSCH corresponds or based on the activated UL BWP in applying the SRI indicated by the second MAC CE (in a case where the UL BWP to which the PDSCH corresponds is different from the activated UL BWP in applying the SRI indicated by the second MAC CE); or, in other words, the above activated UL BWP refers to the activated UL BWP in receiving the PDSCH, or the activated UL BWP in applying the SRI.

Specifically, (for the case where the second MAC CE includes or does not include the third information field) if UL BWP switch occurs after the indicated (by the second MAC CE) SRI is applied, the NCR proceeds to perform forwarding by using a beam to which the SRI corresponds, or, the NCR performs forwarding after redetermining an SRI according to the switched UL BWP. For example, before UL BWP switch, the NCR determines an SRI according to UL BWP 0 (indicated by the third information field or determined in the above method (when the third information field is not included), and after UL BWP switch, redetermines an SRI according to UL BWP 1 (activated UL BWP after switch). Or, the NCR expects that the above situation (BWP switch occurs after the indicated an SRI is applied) will not occur, or, the NCR expects that BWP switch will not occur before a new second MAC CE (or a corresponding PDSCH) is received or the DCI/PDCCH used for scheduling the PDSCH is received.

For the third MAC CE

In some embodiments, the third MAC CE is used to indicate uplink beams and/or downlink beams of the backhaul link. When the control link applies the Rel-17 beam indication framework, the second indication information indicates a TCI state used for the backhaul link from the second TCI state set. Wherein, the second TCI state set includes, for example, TCI states configured for all (configured) DL BWPs of a serving cell (such as the Pcell), i.e. a union of TCI states (TCI state lists) of all DL BWPs configured by, for example, dl-OrJointTCI-StateToAddModList-r17 and dl-OrJointTCI-StateToRelease-List-r17 of dl-OrJointTCI-StateList in PDSCH-Config. Or, the second TCI state set includes, the configured TCI states of one of DL BWPs of a serving cell (such as the Pcell), i.e. TCI states (TCI state lists) of the DL BWP configured by, for example, dl-OrJointTCI-StateToAddModList-r17 and dl-OrJointTCI-StateToReleaseList-r17 in PDSCH-Config, that is, they are equal to TCI states (TCI state lists) configured by dl-OrJointTCI-StateToAddModList-r17 and dl-OrJointTCI-StateToReleaseList-r17 in PDSCH-Config of the DL BWP. The (unified) TCI states configured in dl-OrJointTCI-StateList may be used for uplink and/or downlink, and the (unified) TCI states may be used for determining uplink beams and/or downlink beams of the backhaul link.

In some embodiments, the third MAC CE includes a first information field for indicating a TCI state (e.g. a TCI state ID), and includes or does not include a second information field for indicating a serving cell (e.g. a serving cell ID) and/or a third information field for indicating a DL BWP (e.g. a BWP ID). different from the first information field of the first MAC CE, the first information field of the third MAC CE indicates unified TCI states, such as indicating TCI states for a backhaul link from dl-OrJointTCI-StateList. Furthermore, reference may be made to the first MAC CE for implementations of the serving cell and BWP under the third MAC CE including or not including the second information field and/or the third information field.

In some embodiments, the third MAC CE has a variable or fixed bit size, wherein having a fixed bit size includes that information fields included in the third MAC CE and the number of bits included in each information field are fixed, and having a variable bit size includes that information fields included in the third MAC CE and/or the number of bits included in one or more of the information fields are variable. The third MAC CE includes or does not include reserved bits.

In some embodiments, the TCI state indicated by the third MAC CE is or is not an activated (by a legacy MAC CE) TCI state and/or an indicated (by a legacy MAC CE) TCI state. For example, it is required in a protocol that the TCI state indicated by the third MAC CE must be an activated (by the fourth MAC CE(a TCI States activation/deactivation for UE-specific PDSCH MAC CE)) TCI state, or the TCI state indicated by the third MAC CE must be the indicated (by the fifth MAC CE (TCI State Indication for UE-specific PDCCH MAC CE)) TCI state , or the TCI state indicated by the third MAC CE must be a TCI state activated and the indicated (by the fourth and fifth MAC CEs), or, it is not limited thereto.

In some embodiments, the NCR (NCR-MT) does not expect to be configured with multiple serving cells, that is, the NCR is only configured with one serving cell, i.e. a Pcell. In this case, the third MAC CE includes or does not include the above second information field. If the third MAC CE includes an information field used to indicate a serving cell, it must indicate a Pcell, that is, a value of the information field must be equal to 0.

In some embodiments, the NCR (NCR-MT) may be configured with multiple DL BWPs. Or, the NCR does not expect to be configured with multiple DL BWPs, that is, the NCR is configured with only one DL BWP, i.e. an initial DL BWP. In this case, the third MAC CE includes or does not include the above third information field. If the third MAC CE includes an information field for indicating a downlink BWP, it must indicate an initial DL BWP, that is, a value of the information field must be equal to 0.

In some embodiments, taking the case where switch occurs in the downlink BWP into account, the third MAC CE does not include the third information field. By default, the downlink BWP is, for example, an initial DL BWP, or a default DL BWP, or an activated DL BWP. If it is an activated DL BWP, taking possible occurrence of DL BWP switch into account, it is needed to further determine which DL BWP is based; otherwise, the NCR may possibly not be able to correctly understand indication/configuration of the network device.

In some embodiments, the PDSCH used to carry the third MAC CE and the DCI/PDCCH scheduling the PDSCH are transmitted at identical or different DL BWPs. That is, the activated BWP in receiving the PDSCH is identical to or different from the activated DL BWP in receiving the DCI/PDCCH scheduling the PDSCH, and/or, a BWP where the PDSCH carrying the third MAC CE is located is identical to or different from the activated DL BWP in applying the TCI state indicated by the first MAC CE.

In addition, the inventors think that if TCI state lists configured for above different DL BWP are different, according to the TCI state ID indicated by the third MAC CE and based on different DL BWPs, TCI states determined by the NCR may be different (for example, reference signals included in the TCI states are different). That is, which TCI state is indicated by the network device is ambiguous, and the NCR is unable to uniquely determine which TCI state or reference signal is to be used. In order to solve this problem, the method may further include:

the NCR expects that TCI state lists configured for all BWPs (of the first serving cell) are identical, or

the NCR expects that no DL and/or UL BWP switch occurs between receiving the above PDSCH and DCI/PDCCH, and/or, expects that no DL and/or UL BWP switch occurs between receiving the above PDSCH and applying the indicated TCI state, and/or expects that no DL and/or UL BWP switch occurs between receiving the above DCI/PDCCH and applying the indicated TCI state, or

determines a TCI state based on the DL and/or UL to which the PDSCH corresponds or based on the DL and/or UL BWPs to which the DCI/PDCCH corresponds (in a case where the PDSCH and the DCI/PDCCH correspond to different DL and/or UL BWPs and/or in a case where the DL and/or UL BWPs to which the PDSCH is different from the activated DL BWP in applying the TCI state indicated by the third MAC CE); or,

determines a TCI state based on the DL BWP to which the PDSCH corresponds or based on the activated BWP in applying the TCI state indicated by the third MAC CE (in a case where the BWP to which the PDSCH corresponds is different from the activated DL and/or UL BWP in applying the TCI state indicated by the third MAC CE); or, in other words, the above activated DL and/or UL BWP refer(s) to the activated DL and/or UL BWP in receiving the PDSCH, or the activated DL and/or UL BWP in applying the TCI state.

Specifically, (for the case where the third MAC CE includes or does not include the third information field) if DL and/or UL BWP switch occurs after the indicated (by the third MAC CE) TCI state is applied, the NCR proceeds to perform forwarding by using the TCI state, or, the NCR performs forwarding after redetermining a TCI state according to the switched DL and/or UL BWP. For example, before DL and/or UL BWP switch, the NCR determines a TCI state according to DL and/or UL BWP 0 (indicated by the third information field or determined according to the above method (when the third information field is not included), and after DL and/or UL BWP switch, redetermines a TCI state according to DL and/or UL BWP 1 (activated DL and/or UL BWP after switch) (assuming that the first information field in the third MAC CE indicates a corresponding TCI state ID (configured for) of DL and/or UL BWP 1). Or, the NCR expects that the above situation (DL and/or UL BWP switch occurs after the indicated TCI state is applied) will not occur, or, the NCR expects that DL and/or UL BWP switch will not occur before a new third MAC CE (or a corresponding PDSCH) is received or the DCI/PDCCH used for scheduling the PDSCH is received.

In some embodiments, the second TCI set includes, for example, uplink TCI states configured for a serving cell, such as including all (configured) UL BWPs of a serving cell (such as a Pcell) or UL TCI states of one of the UL BWPs configured, for example, by ul-TCI-ToAddModList; however, this disclosure is not limited thereto. The third MAC CE may further indicate a TCI state for a backhaul link from the second TCI set containing the above uplink TCI states, and a specific indication method is similar to the previous implementation, which shall not be repeated herein any further.

As described above, the third backhaul link beam may also be determined according to the third indication information used to indicate a control link beam, and the third indication information indicates a unified TCI state. For example, for an NCR, the unified TCI state type must indicate uplink and downlink joint, or may indicate uplink and downlink joint or separate, wherein the separate represents that the serving cell configures dl-OrJointTCI-StateList of a downlink TCI state and ul-TCI-ToAddModList of an uplink TCI state, and joint represents the serving cell configures dl-OrJointTCI-StateList of the uplink and downlink joint state.

In some embodiments, in 202, the performing forwarding by using a second backhaul link beam on a second time resource includes performing forwarding by using the second backhaul link beam on the second time resource in a case where the second time resource is before the third backhaul link beam being indicated or determined and/or the third backhaul link being applying, or if the second time resource does not have a third backhaul link beam.

For example, for the Rel-17 beam indication framework, for a case where there exists no (time resource of) third backhaul link beam, forwarding is performed by using the second backhaul link beam on the second time resource. That there exists no third backhaul link beam refers to that there exists no available third backhaul link beam. The time resource is before the third backhaul link beam being indicated or determined and/or the third backhaul link being applying. Wherein, if the NCR does not support the second indication information, forwarding is performed by using the second backhaul link beam before being indicated (by the third indication information) a TCI state and/or applying the indicated TCI state. If the NCR supports the second indication information, forwarding is performed by using the second backhaul link beam before being indicated (by the second indication information) a third backhaul link beam and/or applying the indicated third backhaul link beam and before being indicated (by the third indication information) a TCI state and/or applying the indicated TCI state (or before determining the third backhaul link according to the third indication information).

In some embodiments, in 202, the performing forwarding by using a third backhaul link beam on a third time resource includes performing forwarding by using the third backhaul link beam on the third time resource in a case where the third time resource is after the third backhaul link beam being indicated or determined and/or the third backhaul link being applying, or in a case where the third time resource has a third backhaul link beam. The first time resource is or is not before the third backhaul link beam being indicated or determined and/or the third backhaul link being applying.

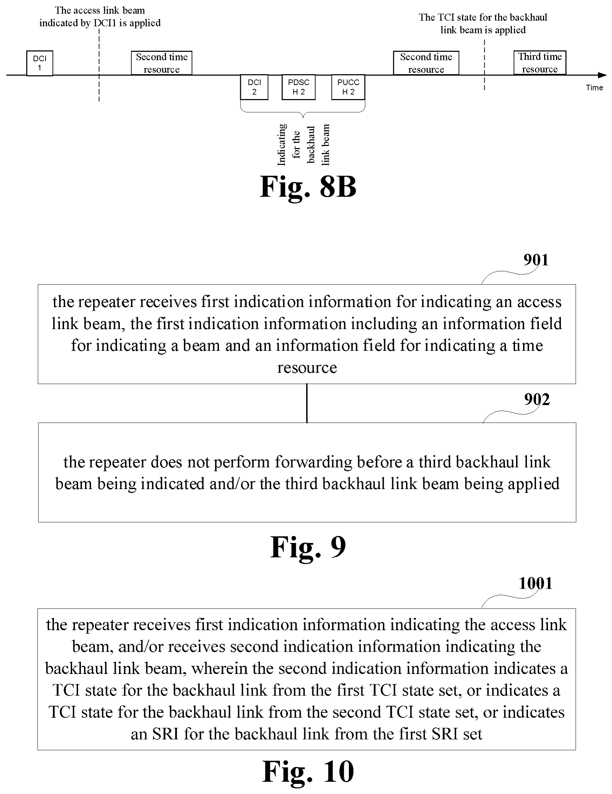

FIGs. 8A and 8B are schematic diagrams of time resources of the embodiments of this disclosure. As shown in FIG. 8A, for the first beam indication, PDSCH1 carries the access link beam indication, indicating the second time resource and the third time resource, and forwarding is performed on the second time resource by using the second backhaul link beam; and PDSCH2 carries the backhaul link beam indication, and forwarding is performed on the third time resource by using the backhaul link beam indicated by PDSCH2. As shown in FIG. 8B, for the second beam indication, DCI1 carries the access link beam indication, indicating the second time resource and the third time resource, and forwarding is performed on the second time resource by using the second backhaul link beam; and PDSCH2 carries the backhaul link beam indication, and forwarding is performed on the third time resource by using the backhaul link beam indicated by PDSCH2.

In some embodiments, after the NCR receives an initial higher-layer configuration dl-OrJoint-TCIStateList with multiple TCI states and before the indicated TCI is applied from the configured TCI states, the NCR assumes that DL signals/channels (such as DM-RSs of the PDSCH and DM-RSs and CSI-RSs of the PDCCH applying the indicated TCI state) are quasi-co-located with SSs/PBCH blocks identified by the UE in the initial access procedure.

In some embodiments, after the NCR receives an initial higher-layer configuration *dl-OrJoint-TCIStateList* with multiple DL TCI states and multiple UL TCI states and before the indicated TCI is applied from the configured TCI states, the NCR assumes that the UL TX spatial filter (of the spatial link and/or the backhaul link) is identical to a spatial filter of PUSCH transmission scheduled by an RAR UL grant in the initial access procedure.

In some embodiments, in 202, the not performing forwarding on a fourth time resource includes: not performing forwarding on the fourth time resource in a case where the fourth time resource is before the third backhaul link beam being indicated or determined and/or the third backhaul link being applying, or in a case where the fourth time resource does not have a third backhaul link beam. Wherein, the control link performs downlink reception or uplink transmission or does not perform downlink reception and/or uplink transmission on the fourth time resource.

Thus, by transmitting the indication information by the network device to the repeater, the beams when the NCR performs forwarding may be enabled to match with the beams of the terminal equipment for receiving forwarded signals, thereby improving the effect of amplifying/enhancing signals, reducing interference to other devices in the network, and improving throughput of the network.

The above problem (1) may be solved by defining a default second backhaul link beam. The embodiments of this disclosure further provide a method to solve this problem. FIG. 9 is a schematic diagram of an information receiving method of the embodiments of this disclosure. As shown in FIG. 9, the method includes:

901: the repeater receives first indication information for indicating an access link beam, the first indication information including an information field for indicating a beam and an information field for indicating a time resource; and
902: the repeater does not perform forwarding before a third backhaul link beam being indicated and/or the third backhaul link beam being applying.

In some embodiments, for the Rel-17 beam indication framework, forwarding is not performed for a time resource that does not have a third backhaul link beam.

For example, if the NCR does not support the second indication information, forwarding is not performed before being indicated (by the third indication information) a TCI state and/or applying the indicated TCI state, and if the NCR supports the second indication information, forwarding is not performed before being indicated (by the second indication information) a third backhaul link beam and/or applying the indicated third backhaul link beam and before being indicated (by the third indication information) a TCI state and/or applying the indicated TCI state (or, in other words, before determining the third backhaul link beam according to the third indication information).

In some embodiments, the not performing forwarding before being indicated a third backhaul link beam and/or applying the third backhaul link beam includes: not applying the first indication information by the NCR.

The embodiments of this disclosure further provide an information processing method, which shall be described from a repeater side. The method includes: the repeater does not (expect to) receive the first indication information and/or apply the first indication information before being indicated a third backhaul link beam and/or applying the third backhaul link beam.

Therefore, the time resources indicated by the access link beam may possibly be located before the time resources corresponding to that the network device indicates the backhaul link beam or the NCR applies the backhaul link beam indicated by the network device, and the repeater does not forward signals, or does not receive the first indication information and/or apply the first indication information, which may avoid conflicts with the "ON" state protocol of the NCR-Fwd.

The embodiments of this disclosure further provide an information receiving method. FIG. 10 is a schematic diagram of the information receiving method of the embodiments of this disclosure. As shown in FIG. 10, the method includes:

1001: the repeater receives first indication information indicating the access link beam, and/or receives second indication information indicating the backhaul link beam, wherein the second indication information indicates a TCI state for the backhaul link from the first TCI state set, or indicates a TCI state for the backhaul link from the second TCI state set, or indicates an SRI for the backhaul link from the first SRI set.

In some embodiments, reference may be made to the above embodiments for implementations of the first indication information and the second indication information. Application of timing/switching delay of the first indication information and the second indication information shall be described below.

In some embodiments, for the first indication information (first beam indication) carried by RRC signaling, the first indication information is applied from a third time position.

For example, the NCR (NCR-Fwd) (is expected to/should) (be able to) applies an indicated (by the first beam indication) (first one) beam from the third time position (for forwarding), or, in other words, applies the beam indication. Prior to this, the NCR needs to or does not need to perform forwarding.

The third time position shall be described below. The third time position is related to RRC processing delay (used to carry/transmit the indicated RRC message) and/or the indicated (by the first indication information) time resources and/or HARQ (HARQ-ACK feedback, acknowledgement message), or, in other words, it is dependent on the RRC processing delay and/or the indicated time resources.

For example, the third time position is:

a slot $n+ T_{RRC\_processing}$ / *NR slot length* or $\text{slot n} + T_{HARQ} + 3N_{slot}^{subframe,\mu}$ , or a first one of slots between the above two, or,

a slot $n+ T_{RRC\_processing}$ / *NR slot length* or $\text{slot n} + T_{HARQ} + 3N_{slot}^{subframe,\mu}$ or a first indicated (by the first indication information) time resource after a last slot between the above two, or,

a slot $n+ T_{RRC\_processing}$ / *NR slot length* or $\text{slot n} + T_{HARQ} + \text{slot n} + T_{HARQ} + 3N_{slot}^{subframe,\mu}$ or a slot including a first indicated (by the first indication information) time resource after a last slot between the above two;

where, $N_{slot}^{subframe,\mu}$ denotes the number of slots of subcarriers $\mu$ included in a subframe, that is, it is equivalent in length to a length of a subframe, $T_{RRC\_processing}$ is the RRC processing delay (used to carry/transmit the indicated RRC message), and $T_{HARQ}$ is the time between downlink data transmission and acknowledgement. The above downlink data transmission refers to a PDSCH used to carry the above RRC message or indication, and the above acknowledgement refers to HARQ-ACK for the PDSCH. $T_{HARQ}$ is extended to a time from all next HARQ feedback transmission and retransmission occasions to successful transmission thereof.

Slot n is a (last) slot where the PDSCH carrying the RRC message is located, or, slot n is a (last) (uplink/downlink) slot that overlaps with the PDSCH carrying the RRC message. For the latter case, a subcarrier spacing of slot n is identical to or different from a subcarrier spacing of the PDSCH carrying the above RRC message. A subcarrier spacing of slot n is identical to or different from a subcarrier spacing of the above NR slot (in an NR slot length).

Subcarrier spacings of the above slots (slot n/NR slot) are the following subcarrier spacings or are related to the following subcarrier spacings (such as being determined based on the following subcarrier spacings):

a subcarrier spacing of the PDSCH used for transmitting/carrying the above RRC message or indication, and/or,
a subcarrier spacing of PUSCH/PUSCH for HARQ-ACK of the PDSCH used for transmitting/carrying the above RRC message or indication.

When $T_{HARQ}$ is greater than $TT_{RRC\_processing}$, longer switching delay is allowed.

In some embodiments, for the first indication information (second beam indication) carried by the DCI, the first indication information is applied from a fourth time position.

For example, the NCR (NCR-Fwd) (is expected to/should) (be able to) applies an indicated (by the first beam indication) (first) beam from the fourth time position (for forwarding), or, in other words, applies the beam indication.

The fourth time position shall be described below.

A first one of slots after a slot n+timeDurationForQCL or $\text{slot } n + T_{HARQ} + 3N_{slot}^{subframe,\mu}$ , or,

a first indicated (by the second indication information) time resource after a slot n+timeDurationForQCL or $\text{slot } n + T_{HARQ} + 3N_{slot}^{subframe,\mu}$ , or

a slot including a first indicated (by the first indication information) time resource after a slot n+timeDurationForQCL or

$$\text{slot } n + T_{HARQ} + 3N_{slot}^{subframe,\mu}$$ ;

where, the processing time timeDurationForQCL denotes the time required by the UE to perform PDCCH reception and applying the indication/AC-link beams received in DCI for forwarding.

Slot n is a (last) slot where the PDCCH/DCI carrying the first indication information is located, or, slot n is a (last) (uplink/downlink) slot that overlaps with the PDCCH/DCI carrying the first indication information. For the latter case, a subcarrier spacing of slot n is identical to or different from a subcarrier spacing of the PDSCH carrying the above RRC message.

Subcarrier spacings of the above slots (slot n/NR slot) are the following subcarrier spacings or are related to the following subcarrier spacings (such as being determined based on the following subcarrier spacings):

a subcarrier spacing of the PDSCH used for transmitting/carrying the above RRC message, and/or,
a subcarrier spacing of PUSCH/PUSCH for HARQ-ACK of the PDSCH used for transmitting/carrying the above RRC message.

In some embodiments, the backhaul link beam indicated by the second indication information is applied from a fifth time position.

For example, the NCR (NCR-Fwd) (is expected to/should) (be able to) applies an indicated (by the second beam indication) backhaul link beam from the fifth time position (for forwarding), or, in other words, applies the beam indication.

The fifth time position shall be described below.

A first one of slots after a slot $n + T_{HARQ} + 3N_{slot}^{subframe,\mu}$ or slot $n + 3N_{slot}^{subframe,\mu}$

$+(T_{HARQ} + TO_k*(T_{first\text{-}SSB} + T_{SSB\text{-}proc} + T_{SSB}*L_{MAC,known}))$ */NR slot length* or

$n + 3N_{slot}^{subframe,\mu} + (T_{HARQ} + T_{L1\text{-}RSRP} + TO_{uk}*(T_{first\text{-}SSB} + T_{SSB\text{-}proc} + T_{SSB}*L_{MAC,unknown})) /$

*NR slot length* , or,

a first indicated (by the second indication information) time resource after a slot $n + T_{HARQ} + 3N_{slot}^{subframe,\mu}$ or

slot $n + 3N_{slot}^{subframe,\mu} + (T_{HARQ} + TO_k*(T_{first-SSB} + T_{SSB-proc} + T_{SSB}*L_{MAC,known}))$ /NR slot length or $n + 3N_{slot}^{subframe,\mu} + (T_{HARQ} + T_{L1-RSRP} + TO_{uk}*(T_{first-SSB} + T_{SSB-proc} + T_{SSB}*L_{MAC,unknown}))$ / NR slot length , or,

a slot including a first indicated (by the first indication information) time resource after a slot $n + T_{HARQ} + 3N_{slot}^{subframe,\mu}$ or slot $n + 3N_{slot}^{subframe,\mu} + (T_{HARQ} + TO_k*(T_{first-SSB} + T_{SSB-proc} + T_{SSB}*L_{MAC,known}))$ /NR slot length or $n + 3N_{slot}^{subframe,\mu} + (T_{HARQ} + T_{L1-RSRP} + TO_{uk}*(T_{first-SSB} + T_{SSB-proc} + T_{SSB}*L_{MAC,unknown}))$ / NR slot length ;

where, $3N_{slot}^{subframe,\mu}$ and $T_{HARQ}$ are as described above, and when a target TCI state is known, when the PDSCH carrying the MAC CE activation command is received at slot n, the NCR is able to receive the PDCCH with a target TCI state of the serving cell, wherein TCI state switch occurs at a first one of slots after a slot

$n + 3N_{slot}^{subframe,\mu} + (T_{HARQ} + TO_k*(T_{first-SSB} + T_{SSB-proc} + T_{SSB}*L_{MAC,known}))$/NR slot length .

$T_{first-SSB}$ is a time of a first one of SSB transmission occasions after the MAC CE, and $T_{SSB}$ is an SSB transmission period of a serving cell;

$L_{MAC,known} \le L_{MAC,known,max}$ is the number of corresponding SSB occasions unavailable at the NCR; where, $L_{MAC,known,max} = 2$, $T_{SSB} \le 40$ ms, or, $L_{MAC,known,max} = 1$, $T_{SSB} > 40$ ms.

Wherein, when the target TCI state is unknown, when the PDSCH carrying the MAC CE activation command is received at slot n, the NCR is able to receive the PDCCH with the target TCI state of the serving cell, wherein TCI state switch occurs at a first one of slots after slot $n + 3N_{slot}^{subframe,\mu} + (T_{HARQ} + T_{L1-RSRP} + TO_{uk}*(T_{first-SSB} + T_{SSB-proc} + T_{SSB}*L_{MAC,unknown}))$ / NR slot length.

By clarifying the application times of the first indication information and the second indication information, the time when the NCR performs forwarding may be enabled to match a time of a terminal equipment in receiving forwarded signals, thereby improving the effect of amplifying/enhancing signals, reducing interference to other devices in the network, and improving throughput of the network.

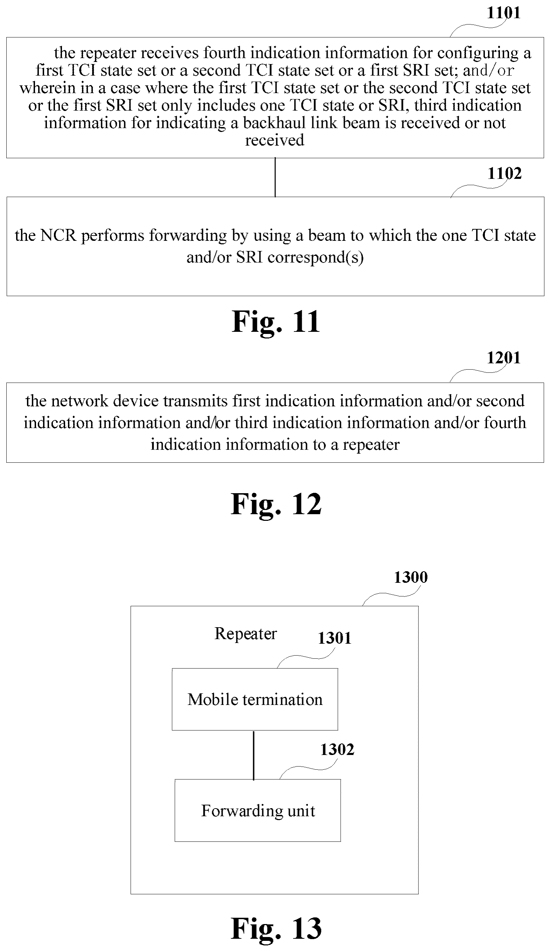

The embodiments of this disclosure further provide an information receiving method, which shall be described from a repeater side. FIG. 11 is a schematic diagram of the information receiving method of the embodiments of this disclosure. As shown in FIG. 11, the method includes:

1101: the repeater receives fourth indication information for configuring a first TCI state set or a second TCI state set or a first SRI set,

wherein in a case where the first TCI state set or the second TCI state set or the first SRI set only includes one TCI state or SRI, third indication information for indicating a backhaul link beam is received or not received.

In some embodiments, the NCR supports the third indication information. Reference may be made to the previous embodiments for how the fourth indication information configures the first TCI state set or the second TCI state set or the first SRI set, which shall not be repeated herein any further.

In some embodiments, the method may further include: 1102: the NCR performs forwarding by using a beam to which the one TCI state and/or SRI correspond(s).

At least addressed to above problem (1)

The embodiments of this disclosure provide a forwarding control method (not shown), the method including:

when an NCR is indicated a backhaul link beam and there is no indicated/determined/available access link beam, the indicated backhaul link beam and/or an indication command for indicating a backhaul link beam is invalidated or disabled, and/or the NCR (NCR-Fwd) is OFF or does not forward or ignores an indication command for indicating the backhaul link beam, or,

when the NCR receives an indication command for indicating a backhaul link beam and is indicated an access link beam again, or before a received access link beam indication is applied/valid, the indication command is invalidated or is not applied, and/or the NCR (NCR-Fwd) is OFF or does not forward or ignores an indication command, or,

for a time resource, when the NCR determines a backhaul link beam and there is no available access link beam, a determined backhaul link beam is invalidated or is not applied, and/or the NCR (NCR-Fwd) is OFF or does not forward, and/or the NCR does not determine a backhaul link beam to which the time resource corresponds; or,

for a time resource, when the NCR is indicated an access link beam, the NCR must/should have an indicated or determined backhaul link beam, or expects to receive a backhaul link beam indication indicating a backhaul link beam for the time resource, and/or determines a backhaul link beam; or,

when the NCR receives an access link beam indication command, the access link beam indicated by the indication command is related to a time resource and the NCR is unable to determine a backhaul link beam related to the time resource, the NCR (NCR-Fwd) is OFF or does not forward or concerns about the access link beam indication command.

In some embodiments, if the NCR is indicated a BH-link beam (such as being indicated by an indication command indicating a backhaul link beam, such as an MAC CE, such as the above second indication information), (for a time resource) if there is no indicated/determined/available access link beam (at the time resource), the indicated BH-link beam (or corresponding indication command) is invalidated or disabled, and/or the NCR (NCR-Fwd) is OFF or does not forward or ignores the indication command.

In some embodiment, if the NCR receives the indication command for indicating a backhaul link beam, such as an MAC CE, and is indicated an access link beam (or has not received periodic/semi-persistent ((dedicated) RRC signaling, such as the above first beam indication information) or aperiodic/dynamic (DCI, such as the above second beam indication information) access link beam indication) again, or before a received access link beam indication is applied/valid, the indication command indicating the backhaul link beam is invalidated /is not applied, and/or the NCR (NCR-Fwd) is OFF or does not forward or ignores the indication command.

In some embodiments, for a time resource, if the NCR determines a BH-link beam (according to a predefined rule), if there is no available access link beam (indicated/determined access link beam), the determined BH-link beam is invalidated or disabled, and/or, the NCR (NCR-Fwd) is OFF or does not forward, and/or, the NCR does not determine a BH-link beam to which the time resource corresponds (such as according to a predefined rule or according to a received BH-link beam indication).

In some embodiments, for a time resource (with a C-link performing or not performing transceiving), if the NCR is indicated an access link beam, the NCR must/should have an indicated or determined (according to a predefined rule) BH-link beam. That is, for the time resource that is indicated an access link beam, the NCR (which supports BH-link beam indication) expects to receive a BH-link beam indication (BH-link beam command, MAC CE, such as the above second indication information) indicating BH-link beam for the time resource, and/or, (in a case where the above BH-link beam indication is not received or the NCR does not support BH-link beam indication or the C-link performs transceiving), the NCR (must/is expected) determines the BH-link beam (for the time resource) (according to a predefined rule).

In some embodiments, if the NCR receives an AC-link beam indication command (DCI and/or MAC CE and/or RRC signaling, such as the above first beam indication information or second beam indication information), the AC-link beam indicated by the command is associated with a time resource. If the NCR is unable to determine the BH-link beam associated with the time resource (such as via signaling used to indicate the BH-link beam (e.g., the second indication information), or according to a predefined rule), the NCR (NCR-Fwd) is OFF or does not forward or concerns about the AC-link beam indication command.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

Embodiments of a second aspect

The embodiments of this disclosure provide an information transmitting method, which shall be described from a network device side, with contents identical to those in the embodiments of the first aspect being not going to be described herein any further.

FIG. 12 is a schematic diagram of the information transmitting method of the embodiments of this disclosure. As shown in FIG. 12, the method includes:

1201: the network device transmits first indication information and/or second indication information and/or third indication information and/or fourth indication information to a repeater. Reference may be made to the embodiments of the first aspect for implementations of the information, which shall not be repeated herein any further.

In some embodiments, in a case where the first TCI state set or the second TCI state set or the first SRI set includes only one TCI state or SRI, third indication information for indicating a backhaul link beam is transmitted or is not transmitted.

In some embodiments, the first indication information is not transmitted before a third backhaul link beam is indicated and/or applied.

It should be noted that FIG. 12 only schematically illustrates the embodiments of this disclosure; however, this disclosure is not limited thereto. For example, an order of execution of the operations may be appropriately adjusted, and furthermore, some other operations may be added, or some operations therein may be reduced. And appropriate variants may be made by those skilled in the art according to the above contents, without being limited to what is contained in FIG. 12.

The steps or processes related to this disclosure are only described above; however, this disclosure is not limited thereto. The method of the embodiments of this disclosure may also include other steps or processes, and reference may be made to relevant techniques for specific contents of these steps or processes.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

Thus, by transmitting the indication information by the network device to the repeater, the beams when the NCR performs forwarding may be enabled to match with the beams of the terminal equipment for receiving forwarded signals, thereby improving the effect of amplifying/enhancing signals, reducing interference to other devices in the network, and improving throughput of the network.

Embodiments of a third aspect

The embodiments of this disclosure provide a repeater. The repeater may be, for example, the NCR as described above, or a network device or terminal equipment having a function of forwarding, or one or some components or assemblies configured in the NCR or the network device or the terminal equipment.

FIG. 13 is a schematic diagram of the repeater of the embodiments of this disclosure. As a principle of the repeater for solving problems is similar to that of the method in the embodiments of the first aspect, reference may be made to the implementation of the method described in the embodiments of the first aspect for implementation of the repeater, with identical contents being not going to be described herein any further.

As shown in FIG. 13, the repeater 1300 includes:

a mobile termination 1301 configured to receive first indication information for indicating an access link beam, the first indication information including an information field for indicating a beam on an access link and an information field for indicating a time resource; and
a forwarding unit 1302 configured to perform forwarding by using a first backhaul link beam on a first time resource, and/or perform forwarding by using a second backhaul link beam on a second time resource, and/or perform forwarding by using a third backhaul link beam on a third time resource, and/or not to perform forwarding on a fourth time resource;
or,
a mobile termination 1301 configured to receive first indication information for indicating an access link beam, the first indication information including an information field for indicating a beam and an information field for indicating a time resource; and
a forwarding unit 1302 configured to perform forwarding or not to perform forwarding by using a second backhaul link beam before a third backhaul link beam is indicated and/or the third backhaul link beam is applied;
or,
a mobile termination 1301 configured to not (expect) to receive first indication information and/or apply first indication information before a third backhaul link beam being indicated and/or a third backhaul link beam being applying;
or,
a mobile termination 1301 configured to receive first indication information for indicating an access link beam, and/or receive second indication information for indicating a backhaul link beam, wherein the second indication information indicates a TCI state used for the backhaul link from a first TCI state set, or indicates a TCI state used for the backhaul link from a second TCI state set, or indicates an SRI used for the backhaul link from a first SRI set;

or,

a mobile termination 1301 configured to receive fourth indication information for configuring a first TCI state set or a second TCI state set or a first SRI set,

wherein in a case where the first TCI state set or the second TCI state set or the first SRI set only includes one TCI state or SRI, third indication information for indicating a backhaul link beam is received or not received.

Furthermore, for the sake of simplicity, connection relationships between the components or modules or signal profiles thereof are only illustrated in FIG. 13. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

Embodiments of a fourth aspect

The embodiments of this disclosure provide a network device.

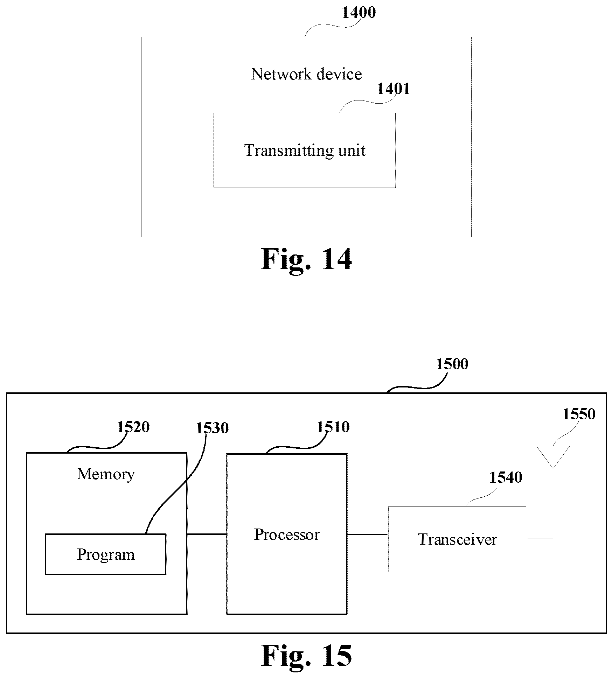

FIG. 14 is a schematic diagram of the network device of the embodiments of this disclosure. As a principle of the network device for solving problems is similar to that of the method in the embodiments of the second aspect, reference may be made to the implementation of the method described in the embodiments of the second aspect for implementation of the network device, with identical or related contents being not going to be described herein any further.

As shown in FIG. 14, the network device 1400 of the embodiments of this disclosure includes:

a transmitting unit 1401 configured to transmit first indication information and/or second indication information and/or third indication information and/or fourth indication information to a repeater. Reference may be made to the embodiments of the first aspect for implementations of the information, which shall not be repeated herein any further.

It should be noted that the components or modules related to this disclosure are only described above. However, this disclosure is not limited thereto, and the network device 1400 of the embodiments of this disclosure may further include other components or modules, and reference may be made to related techniques for particulars of these components or modules.

Furthermore, for the sake of simplicity, connection relationships between the components or modules or signal profiles thereof are only illustrated in FIG. 14. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

Embodiments of a fifth aspect

The embodiments of this disclosure provide a communication system. FIG. 1 is a schematic diagram of the communication system of the embodiments of this disclosure. As shown in FIG. 1, the communication system includes a network device 101, a repeater 102 and a terminal equipment 103. For the sake of simplicity, description is given in FIG. 1 by taking one network device, one repeater and two terminal equipments only as an example; however, the embodiments of this disclosure are not limited thereto.

In the embodiments of this disclosure, existing traffics or traffics that may be implemented in the future may be performed between the network device 101 and the terminal equipment 103. For example, such traffics may include but not limited to enhanced mobile broadband (eMBB), massive machine type communication (mMTC), ultra-reliable and low-latency communication (URLLC), and vehicle to everything (V2X) communication, etc. The repeater 102 is configured to execute the information receiving method in the embodiments of the first aspect, and the network device 101 is configured to execute the information transmitting method in the embodiments of the second aspect, contents of which being incorporated herein, which shall not be repeated herein any further.

The embodiments of this disclosure further provide an electronic device, which may be, for example, a repeater or a network device.

FIG. 15 is a schematic diagram of a structure of the electronic device of the embodiments of this disclosure. As shown in FIG. 15, the electronic device 1500 may include a processor 1510 (such as a central processing unit (CPU)) and a memory 1520, the memory 1520 being coupled to the processor 1510. Wherein, the memory 1520 may store various data, and furthermore, it may store a program 1530 for information processing, and execute the program 1530 under control of the processor 1510.

For example, the processor 1510 may be configured to execute a program to execute the information transmitting method described in the embodiments of the second aspect.

For another example, the processor 1510 may be configured to execute a program to execute the information receiving method described in the embodiments of the first aspect.

Furthermore, as shown in FIG. 15, the electronic device 1500 may include a transceiver 1540, and an antenna 1550, etc. Wherein, functions of the above components are similar to those in the related art, and shall not be described herein any further. It should be noted that the electronic device 1500 does not necessarily include all the parts shown in FIG. 15, and furthermore, the electronic device 1500 may include parts not shown in FIG. 15, and the related art may be referred to.

Embodiments of this disclosure provide a computer readable program, which, when executed in a network device, will cause a computer to carry out the information transmitting method described in the embodiments of the second aspect in the network device.

Embodiments of this disclosure provide a computer medium, including a computer readable program, which will cause a computer to carry out the information transmitting method described in the embodiments of the second aspect in the network device.

Embodiments of this disclosure provide a computer readable program, which, when executed in a repeater, will cause a computer to carry out the information receiving method described in the embodiments of the first aspect in the repeater.

Embodiments of this disclosure provide a computer medium, including a computer readable program, which will cause a computer to carry out the information receiving method described in the embodiments of the first aspect in the repeater.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile termination, and may also be stored in a memory card of a pluggable mobile termination. For example, if equipment (such as a mobile termination) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

As to implementations containing the above embodiments, following supplements are further disclosed.

1. An information receiving method, applicable to a repeater, characterized in that the method includes:

receiving by the repeater first indication information for indicating an access link beam, the first indication information including an information field for indicating a beam on an access link and an information field for indicating a time resource; and

performing forwarding by using a first backhaul link beam on a first time resource, and/or performing forwarding by using a second backhaul link beam on a second time resource, and/or performing forwarding by using a third backhaul link beam on a third time resource, and/or not performing forwarding on a fourth time resource, by the repeater.

2. The method according to supplement 1, wherein the first time resource and/or the second time resource and/or the third time resource and/or the fourth time resource is/are a time resource(s) indicated by the first indication information.

3. The method according to supplement 1 or 2, wherein the forwarding includes downlink forwarding and uplink forwarding.

4. The method according to any one of supplements 1-3, wherein the first backhaul link beam is identical to a control link beam.

5. The method according to supplement 1, wherein a control link performs downlink reception or uplink transmission on the first time resource, the control link does not perform downlink reception and/or uplink transmission on the second domain resource and/or the third time resource, and the control link performs downlink reception or uplink transmission or does not perform downlink reception and/or uplink transmission on the fourth time resource.

6. The method according to any one of supplements 1-4, wherein the second backhaul link includes:

a beam determined by a QCL assumption of a CORESET with a lowest ID; and/or,
a beam determined by a spatial relationship of a PUCCH with a lowest PUCCH resource ID; and/or,
a beam identical to a beam adopted by a control link in performing reception and/or transmission for a latest/last time; and/or,
a beam determined according to an SSB identified/selected in an initial access procedure; and/or,
a beam determined according to an SSB identified/selected in a random access procedure.

6a. The method according to supplement 6, wherein the performing reception by a control link for a latest/last time includes: monitoring a PDCCH and/or receiving a PDSCH and/or a CSI-RS and/or an SSB for a latest/last time, and the performing transmission by a control link for a latest/last time includes: transmitting a PUSCH and/or a PUCCH and/or an SRS for a latest/last time.

7. The method according to supplement 6, wherein the random access procedure is used for initial access or beam failure recovery or RRC connection reestablishment or RRC connection recovery.

8. The method according to supplement 6, wherein the CORESET with the lowest ID is a CORESET with a lowest ID in a first DL BWP and/or a first time position.

9. The method according to supplement 6, wherein the PUCCH with the lowest PUCCH resource ID is a PUCCH with a lowest PUCCH resource ID at a first UL BWP and/or a second time position.

10. The method according to supplement 8, wherein the first DL BWP is in a Pcell, and/or the first DL BWP is an initial DL BWP or a default DL BWP or an active DL BWP.

11. The method according to supplement 8, wherein the first time position includes: a latest/last slot in which one or more CORESETs are monitored by the mobile termination of the repeater.

12. The method according to supplement 9, wherein the first UL BWP is in a Pcell, and/or the first UL BWP is an initial UL BWP or a default UL BWP or an active UL BWP.

13. The method according to supplement 9, wherein the second time position includes: a latest/last slot in which a mobile termination of the repeater transmits a PUCCH.

14. The method according to any one of supplements 1-13, wherein the third backhaul link beam is indicated by second indication information for indicating a backhaul link beam or is determined by third indication information for indicating a control link beam.

15. The method according to supplement 14, wherein the second indication information is MAC signaling.

16. The method according to supplement 14, wherein the second indication information indicates a TCI state for a backhaul link from a first TCI state set, or indicates a TCI state for a backhaul link from a second TCI state set, or indicates an SRI for a backhaul link from a first SRI set.

17. The method according to supplement 14, wherein the third indication information indicates a unified TCI state.

18. The method according to any one of supplements 1-17, wherein the performing forwarding by using a second backhaul link beam on a second time resource includes:

the second time resource is before the third backhaul link beam being indicated or determined and/or the third backhaul link being applied, or,
in a case where the second time resource does not have a third backhaul link beam,
performing forwarding by using a second backhaul link beam on the second time resource.

19. The method according to any one of supplements 1-17, wherein the not performing forwarding on a fourth time resource includes:

the fourth time resource is before the third backhaul link beam being indicated or determined and/or the third backhaul link being applied, or,
in a case where the fourth time resource does not have a third backhaul link beam,
not performing forwarding on the fourth time resource.

20. The method according to supplement 19, wherein a control link performs downlink reception or uplink transmission or does not perform downlink reception and/or uplink transmission on the fourth time resource.

21. The method according to any one of supplements 1 to 20, wherein the performing forwarding by using a third backhaul link beam on a third time resource includes:

the third time resource is after the third backhaul link beam being indicated or determined and/or the third backhaul link being applied, or,
in a case where the third time resource have a third backhaul link beam,
performing forwarding by using a third backhaul link beam on the third time resource.

22. The method according to any one of supplements 1-20, wherein the first time resource is or is not before the third backhaul link beam being indicated or determined and/or the third backhaul link being applied.

23. The method according to any one of supplements 1-21, wherein the NCR supports or does not support the second indication information.

24. An information receiving method, applicable to a repeater, characterized in that the method includes:

receiving by the repeater first indication information for indicating an access link beam, the first indication information including an information field for indicating a beam and an information field for indicating a time resource, and performing forwarding by using a second backhaul link beam or not performing forwarding by the repeater before being indicated a third backhaul link beam and/or applying the third backhaul link beam; or
not (expecting) receiving the first indication information and/or applying the first indication information by the repeater before being indicated the third backhaul link beam and/or applying the third backhaul link beam.

25. The method according to supplement 24, wherein the not performing forwarding before being indicated a third backhaul link beam and/or applying the third backhaul link beam includes: not applying the first indication information by the NCR.

26. An information receiving method, applicable to a repeater, characterized in that the method includes:

receiving by the repeater first indication information for indicating an access link beam, and/or,
receiving by the repeater second indication information for indicating a backhaul link beam, the second indicating information indicating a TCI state for a backhaul link from a first TCI state set, or a TCI state for a backhaul link from a second TCI state set, or an SRI for a backhaul link from a first SRI set.

27. The method according to supplement 26, wherein for the first indication information carried by RRC signaling, the first indication information is applied from a third time position.

28. The method according to supplement 26, wherein for the first indication information carried by DCI, the first indication information is applied from a fourth time position.

29. The method according to supplement 26, wherein a backhaul link beam indicated by the second indication information is applied from a fifth time position.

30. The method according to supplement 26, wherein the second indication information is carried by MAC signaling.

31. An information receiving method, applicable to a repeater, characterized in that the method includes:

receiving by the repeater fourth indication information for configuring a first TCI state set or a second TCI state set or a first SRI set; and
in a case where the first TCI state set or the second TCI state set or the first SRI set only includes one TCI state or SRI, receiving or not receiving by the repeater third indication information for indicating a backhaul link beam.

32. The method according to supplement 31, wherein the NCR supports the third indication information.

33. The method according to supplement 31, wherein the method further includes: performing forwarding by the NCR by using a beam to which the one TCI state and/or SRI correspond(s).

34. A forwarding control method, applicable to a repeater, characterized in that the method includes:

when an NCR is indicated a backhaul link beam and there is no indicated/determined/available access link beam, invalidating or disabling the indicated backhaul link beam and/or an indication command for indicating a backhaul link beam, and/or the NCR (NCR-Fwd) is OFF or not forwarding or ignoring an indication command for indicating the backhaul link beam by the NCR (NCR-Fwd), or,

when the NCR receives an indication command for indicating a backhaul link beam and is indicated an access link beam again, or before a received access link beam indication is applied/valid, invalidating or not applying the indication command, and/or the NCR (NCR-Fwd) is OFF or not forwarding or ignoring an indication command by the NCR (NCR-Fwd), or,

for a time resource, when the NCR determines a backhaul link beam and there is no available access link beam, invalidating or disabling a determined backhaul link beam, and/or the NCR (NCR-Fwd) is OFF or not forwarding by the NCR (NCR-Fwd), and/or not determining a backhaul link beam to which the time resource corresponds by the NCR; or,

for a time resource, when the NCR is indicated an access link beam, must/should have an indicated or determined backhaul link beam by the NCR, or expecting by the NCR to receive a backhaul link beam indication indicating a backhaul link beam for the time resource, and/or determining a backhaul link beam by the NCR; or,

when the NCR receives an access link beam indication command, the indicated access link beam is related to a time resource and the NCR is unable to determine a backhaul link beam related to the time resource, the NCR (NCR-Fwd) is OFF or not forwarding or concerning about the access link beam indication command by the NCR (NCR-Fwd).

35. A repeater, including a memory and a processor, wherein the memory stores a computer program, and the processor is configured to execute the computer program to carry out the method as described in any one of supplements 1-34.

36. An information transmitting method, applicable to a network device, characterized in that the method includes:

transmitting first indication information and/or second indication information and/or third indication information and/or fourth indication information by the network device to a repeater, wherein,
the first indication information is used to indicate an access link beam,
the second indication information is used to indicate a backhaul link beam,
the third indication information is used to indicate a control link beam,
and the fourth indication information is used to configure a first TCI state set or a second TCI state set or a first SRI set.

37. The method according to supplement 36, wherein the second indication information indicates a TCI state for a backhaul link from the first TCI state set, or indicates a TCI state for a backhaul link from the second TCI state set, or indicates an SR for a backhaul link from the first SRI set.

38. A network device, including a memory and a processor, wherein the memory stores a computer program, and the processor is configured to execute the computer program to carry out the method as described in supplement 36 or 37.

**Claims**

1. A repeater, **characterized in that** the repeater comprises:

a mobile termination configured to receive first indication information for indicating an access link beam, the first indication information including an information field for indicating a beam on an access link and an information field for indicating a time resource; and
a forwarding unit configured to perform forwarding by using a first backhaul link beam on a first time resource, and/or perform forwarding by using a second backhaul link beam on a second time resource, and/or perform forwarding by using a third backhaul link beam on a third time resource, and/or not to perform forwarding on a fourth time resource.

2. The repeater according to claim 1, wherein the first time resource and/or the second time resource and/or the third time resource and/or the fourth time resource is/are a time resource(s) indicated by the first indication information.

3. The repeater according to claim 1, wherein the first backhaul link beam is identical to a control link beam.

4. The repeater according to claim 1, wherein a control link performs downlink reception or uplink transmission on the first time resource, the control link does not perform downlink reception and/or uplink transmission on the second domain resource and/or the third time resource, and the control link performs downlink reception or uplink transmission or does not perform downlink reception and/or uplink transmission on the fourth time resource.

5. The repeater according to claim 1, wherein the second backhaul link includes:

   a beam determined by a QCL assumption of a CORESET with a lowest ID; and/or,
   a beam determined by a spatial relationship of a PUCCH with a lowest PUCCH resource ID; and/or,
   a beam identical to a beam adopted by a control link in performing reception and/or transmission for a lastest/last time; and/or,
   a beam determined according to an SSB identified/selected in an initial access procedure; and/or,
   a beam determined according to an SSB identified/selected in a random access procedure.

6. The repeater according to claim 5, wherein the random access procedure is used for initial access or beam failure recovery or RRC connection reestablishment or RRC connection recovery.

7. The repeater according to claim 5, wherein the CORESET with the lowest ID is a CORESET with a lowest ID in a first DL BWP and/or a first time position.

8. The repeater according to claim 5, wherein the PUCCH with the lowest PUCCH resource ID is a PUCCH with a lowest PUCCH resource ID in a first UL BWP and/or a second time position.

9. The repeater according to claim 7, wherein the first DL BWP is in a Pcell, and/or the first DL BWP is an initial DL BWP or a default DL BWP or an active DL BWP.

10. The repeater according to claim 7, wherein the first time position includes: a latest/last slot in which one or more CORESETs are monitored by the mobile termination of the repeater.

11. The repeater according to claim 8, wherein the first UL BWP is in a Pcell, and/or the first UL BWP is an initial UL BWP or a default UL BWP or an active UL BWP.

12. The repeater according to claim 8, wherein the second time position includes: a latest/last slot in which a mobile termination of the repeater transmits a PUCCH.

13. The repeater according to claim 1, wherein the third backhaul link beam is indicated by second indication information for indicating a backhaul link beam or is determined by third indication information for indicating a control link beam.

14. The repeater according to claim 13, wherein the second indication information indicates a TCI state for a backhaul link from a first TCI state set, or indicates a TCI state for a backhaul link from a second TCI state set, or indicates an SRI for a backhaul link from a first SRI set.

15. The repeater according to claim 1, wherein the performing forwarding by using a second backhaul link beam on a second time resource includes:

   the second time resource is before the third backhaul link beam being indicated or determined and/or the third backhaul link being applied, or,
   in a case where the second time resource does not have a third backhaul link beam,
   performing forwarding by using a second backhaul link beam on the second time resource.

16. The repeater according to claim 1, wherein the not performing forwarding on a fourth time resource includes:

   the fourth time resource is before the third backhaul link beam being indicated or determined and/or the third backhaul link being applied, or,

in a case where the fourth time resource does not have a third backhaul link beam,
not performing forwarding on the fourth time resource.

17. The repeater according to claim 16, wherein a control link performs downlink reception or uplink transmission or does not perform downlink reception and/or uplink transmission on the fourth time resource.

18. The repeater according to claim 1, wherein the performing forwarding by using a third backhaul link beam on a third time resource includes:

the third time resource is after the third backhaul link beam being indicated or determined and/or the third backhaul link being applied, or,
in a case where the third time resource have a third backhaul link beam,
performing forwarding by using a third backhaul link beam on the third time resource.

19. A network device, **characterized in that** the network device includes:

a transmitting unit configured to transmit first indication information and/or second indication information and/or third indication information and/or fourth indication information to a repeater, wherein,
the first indication information is used to indicate an access link beam,
the second indication information is used to indicate a backhaul link beam,
the third indication information is used to indicate a control link beam,
and the fourth indication information is used to configure a first TCI state set or a second TCI state set or a first SRI set.

20. A communication system, **characterized in that** the communication system includes a repeater as claimed in claim 1 and/or a network device as claimed in claim 19.

Access link beam

102                                                              103

Control link ──→  NCR-MT

Backhaul link ──→  NCR-Fwd

101                                                              103

## Fig. 1

**201**

the repeater receives first indication information for indicating an access link beam, the first indication information including an information field for indicating a beam on an access link and an information field for indicating a time resource

**202**

the repeater performs forwarding by using a first backhaul link beam on a first time resource, and/or performing forwarding by using a second backhaul link beam on a second time resource, and/or performing forwarding by using a third backhaul link beam on a third time resource, and/or not performing forwarding on a fourth time resource

## Fig. 2

| R | Serving Cell ID | | | | | BWP ID | | Oct 1 |
|---|---|---|---|---|---|---|---|---|
| T7 | T6 | T5 | T4 | T3 | T2 | T1 | T0 | Oct 2 |
| T15 | T14 | T13 | T12 | T11 | T10 | T9 | T8 | Oct 3 |

...

| $T_{(N-2)*8+7}$ | $T_{(N-2)*8+6}$ | $T_{(N-2)*8+5}$ | $T_{(N-2)*8+4}$ | $T_{(N-2)*8+3}$ | $T_{(N-2)*8+2}$ | $T_{(N-2)*8+1}$ | $T_{(N-2)*8}$ | Oct N |

## Fig. 3A

| Serving Cell ID | | | | | BWP ID | | | Oct 1 |
|---|---|---|---|---|---|---|---|---|
| T7 | T6 | T5 | T4 | T3 | T2 | T1 | T0 | Oct 2 |
| T15 | T14 | T13 | T12 | T11 | T10 | T9 | T8 | Oct 3 |

...

| $T_{(N-2)*8+7}$ | $T_{(N-2)*8+6}$ | $T_{(N-2)*8+5}$ | $T_{(N-2)*8+4}$ | $T_{(N-2)*8+3}$ | $T_{(N-2)*8+2}$ | $T_{(N-2)*8+1}$ | $T_{(N-2)*8}$ | Oct N |

## Fig. 3B

| Serving Cell ID | BWP ID | Oct 1 |
|---|---|---|
| R | TCI state ID | Oct 2 |

## Fig. 3C

| R | Serving Cell ID | BWP ID | Oct 1 |
|---|---|---|---|
| R | TCI state ID | | Oct 2 |

## Fig. 3D

| Serving Cell ID | BWP ID | Oct 1 |
|---|---|---|
| TCI state ID | | Oct 2 |

## Fig. 3E

| R | Serving Cell ID | BWP ID | Oct 1 |
|---|---|---|---|
| TCI state ID | | | Oct 2 |

## Fig. 3F

| R | R | R | R | R | R | BWP ID | | Oct 1 |
|---|---|---|---|---|---|---|---|---|
| T7 | T6 | T5 | T4 | T3 | T2 | T1 | T0 | Oct 2 |
| T15 | T14 | T13 | T12 | T11 | T10 | T9 | T8 | Oct 3 |

...

| $T_{(N-2)*8+7}$ | $T_{(N-2)*8+6}$ | $T_{(N-2)*8+5}$ | $T_{(N-2)*8+4}$ | $T_{(N-2)*8+3}$ | $T_{(N-2)*8+2}$ | $T_{(N-2)*8+1}$ | $T_{(N-2)*8}$ | Oct N |
|---|---|---|---|---|---|---|---|---|

## Fig. 4A

| R | R | R | R | R | BWP ID | | | Oct 1 |
|---|---|---|---|---|---|---|---|---|
| T7 | T6 | T5 | T4 | T3 | T2 | T1 | T0 | Oct 2 |
| T15 | T14 | T13 | T12 | T11 | T10 | T9 | T8 | Oct 3 |

...

| $T_{(N-2)*8+7}$ | $T_{(N-2)*8+6}$ | $T_{(N-2)*8+5}$ | $T_{(N-2)*8+4}$ | $T_{(N-2)*8+3}$ | $T_{(N-2)*8+2}$ | $T_{(N-2)*8+1}$ | $T_{(N-2)*8}$ | Oct N |
|---|---|---|---|---|---|---|---|---|

## Fig. 4B

| R | R | R | R | R | BWP ID | Oct 1 |
| R | | | TCI state ID | | | Oct 2 |

## Fig. 4C

| R | R | R | R | R | BWP ID | Oct 1 |
| | | | TCI state ID | | | Oct 2 |

## Fig. 4D

| CORE SET Pool ID | Serving Cell ID | | | | | BWP ID | | Oct 1 |
|---|---|---|---|---|---|---|---|---|
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |

...

| $T_{(N-2)\times8+7}$ | $T_{(N-2)\times8+6}$ | $T_{(N-2)\times8+5}$ | $T_{(N-2)\times8+4}$ | $T_{(N-2)\times8+3}$ | $T_{(N-2)\times8+2}$ | $T_{(N-2)\times8+1}$ | $T_{(N-2)\times8}$ | Oct N |

## Fig. 5A

| Serving Cell ID | | CORESET ID | Oct 1 |
| CORE SET ID | TCI State ID | | Oct 2 |

## Fig. 5B

Carrying the first MAC CE

Frequency

Applying the TCI state
indicated by the first MAC CE

DL BWP 1

PDSCH

PDCCH

DL BWP 0

DL BWP 2

Time

**Fig. 6**

Frequency

UL BWP 1

UL BWP 0

UL BWP 2

Time

Receiving the PDCCH
scheduling the PDSCH,
which carries the
second MAC CE

Receiving the PDSCH
carrying the second
MAC CE

Applying the SRI
indicated by the second
MAC CE

**Fig. 7**

The access link beam indicated
by PDSCH1 is applied

The backhaul link beam
indicated by PDSCH2 is applied

| DCI 1 | PDSC H1 | PUCC H1 | | Second time resource | | Second time resource | | Third time resource |

| DCI 2 | PDSC H2 | PUCC H2 |

Indicating
for the
backhaul
link beam

**Fig. 8A**

The access link beam
indicated by DCI1 is applied

The TCI state for the backhaul
link beam is applied

| DCI 1 | | Second time resource | | | | Second time resource | | Third time resource | Time |

| DCI 2 | PDSC H 2 | PUCC H 2 |

Indicating for the backhaul link beam

## Fig. 8B

901

the repeater receives first indication information for indicating an access link beam, the first indication information including an information field for indicating a beam and an information field for indicating a time resource

902

the repeater does not perform forwarding before a third backhaul link beam being indicated and/or the third backhaul link beam being applied

## Fig. 9

1001

the repeater receives first indication information indicating the access link beam, and/or receives second indication information indicating the backhaul link beam, wherein the second indication information indicates a TCI state for the backhaul link from the first TCI state set, or indicates a TCI state for the backhaul link from the second TCI state set, or indicates an SRI for the backhaul link from the first SRI set

## Fig. 10

1101

the repeater receives fourth indication information for configuring a first TCI state set or a second TCI state set or a first SRI set; and/or wherein in a case where the first TCI state set or the second TCI state set or the first SRI set only includes one TCI state or SRI, third indication information for indicating a backhaul link beam is received or not received

1102

the NCR performs forwarding by using a beam to which the one TCI state and/or SRI correspond(s)

# Fig. 11

1201

the network device transmits first indication information and/or second indication information and/or third indication information and/or fourth indication information to a repeater

# Fig. 12

1300

Repeater    1301

Mobile termination

1302

Forwarding unit

# Fig. 13

**1400**

Network device

**1401**

Transmitting unit

## Fig. 14

**1500**

**1550**

**1520**    **1530**    **1510**

Memory

**1540**

Processor

Transceiver

Program

## Fig. 15

gNB                                                          NCR

PDSCH carrying the RRC message (a unified TCI
state list having a periodic access link beam
indication and a control link)

←————————HARQ-ACK————————

Applying the periodic
access link beam
indication

The PDSCH carries the MAC CE for unified TCI
activation

Time resource indicated
by the periodic access
link beam

←————————HARQ-ACK————————

There is no applicable
backhaul link beam

————DCI indicating a TCI state————→

Applied for both the
control link and the
backhaul link

←————————HARQ-ACK————————

Applying the unified
TCI state indicated
by the DCI

# Fig. 16

## INTERNATIONAL SEARCH REPORT

| International application No. |
| --- |
| **PCT/CN2023/076895** |

### A. CLASSIFICATION OF SUBJECT MATTER

H04B7/155(2006.01)i

According to International Patent Classification (IPC) or to both national classification and IPC

### B. FIELDS SEARCHED

Minimum documentation searched (classification system followed by classification symbols)

IPC:H04L,H04W,H04B

Documentation searched other than minimum documentation to the extent that such documents are included in the fields searched

Electronic data base consulted during the international search (name of data base and, where practicable, search terms used)

CNABS, CNTXT, VEN, ENTXT, ENTXTC, CJFD, 3GPP: 转发, 接入, 链路, 波束, 指示, 信息, 回程, 回传, 控制, 时域, 资源, 上行, forward+, access, link, beam, indication, information, backhaul, control, time domain, resource, uplink, CORESET, QCL, PUCCH, SSB, RRC, DL, BWP, UL, Pcell, TCL, SRI, state

### C. DOCUMENTS CONSIDERED TO BE RELEVANT

| Category* | Citation of document, with indication, where appropriate, of the relevant passages | Relevant to claim No. |
| --- | --- | --- |
| X | CN 115225131 A (HUAWEI TECHNOLOGIES CO., LTD.) 21 October 2022 (2022-10-21) description, paragraphs 106-124, table 7 | 1-20 |
| A | CN 112514315 A (SAMSUNG ELECTRONICS CO., LTD.) 16 March 2021 (2021-03-16) entire document | 1-20 |
| A | CN 114828239 A (DATANG MOBILE COMMUNICATIONS EQUIPMENT CO., LTD.) 29 July 2022 (2022-07-29) entire document | 1-20 |
| A | US 2022053433 A1 (QUALCOMM INC.) 17 February 2022 (2022-02-17) entire document | 1-20 |
| A | WO 2022148472 A1 (VIVO MOBILE COMMUNICATION CO., LTD.) 14 July 2022 (2022-07-14) entire document | 1-20 |

☐ Further documents are listed in the continuation of Box C.   ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **01 November 2023** | **07 November 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/076895**

| Patent document cited in search report | | | Publication date (day/month/year) | Patent family member(s) | | | Publication date (day/month/year) |
|---|---|---|---|---|---|---|---|
| CN | 115225131 | A | 21 October 2022 | None | | | |
| CN | 112514315 | A | 16 March 2021 | EP | 3827548 | A1 | 02 June 2021 |
| | | | | EP | 3827548 | A4 | 29 September 2021 |
| | | | | US | 2021226745 | A1 | 22 July 2021 |
| | | | | US | 11641258 | B2 | 02 May 2023 |
| | | | | WO | 2020027594 | A1 | 06 February 2020 |
| | | | | KR | 20210029281 | A | 15 March 2021 |
| | | | | US | 2020044797 | A1 | 06 February 2020 |
| | | | | US | 10972244 | B2 | 06 April 2021 |
| CN | 114828239 | A | 29 July 2022 | None | | | |
| US | 2022053433 | A1 | 17 February 2022 | WO | 2022036289 | A1 | 17 February 2022 |
| | | | | EP | 4197122 | A1 | 21 June 2023 |
| WO | 2022148472 | A1 | 14 July 2022 | None | | | |

Form PCT/ISA/210 (patent family annex) (July 2022)